# FASCICULE DE BREVET EUROPEEN

(11) **EP 3 601 754 B1**
(45) Date de publication et mention de la délivrance du brevet: **30.09.2020**
(21) Numéro de dépôt: 18714334.2
(22) Date de dépôt: 20.03.2018
(51) Int. Cl.: B01D 45/16, F01M 13/04

(54) **DISPOSITIF TOURNANT POUR SÉPARER L'HUILE DES GAZ DE CARTER D'UN MOTEUR À COMBUSTION INTERNE**
DREHVORRICHTUNG ZUR TRENNUNG VON ÖL AUS DEM KURBELGEHÄUSEGAS EINER BRENNKRAFTMASCHINE
ROTATING DEVICE FOR SEPARATING OIL FROM THE CRANKCASE GAS OF AN INTERNAL COMBUSTION ENGINE

(30) Priorité: 28.03.2017 FR 1752568
(43) Date de publication de la demande: 05.02.2020
(73) Titulaire: Sogefi Filtration, 78280 Guyancourt (FR)
(72) Inventeur: BONNE, Samuel, 14350 LA Graverie (FR); PETIPAS, Christophe, 78150 Le Chesnay (FR)
(74) Mandataire: Plasseraud IP
(86) Numéro de dépôt international: PCT/FR2018/050665
(87) Numéro de publication internationale: WO 2018/178540

(56) Documents cités:
- DE-A1- 19 607 919
- DE-A1-102013 106 332
- DE-A1-102013 106 334
- DE-C1- 19 947 143
- JP-A- H07 150 924
- US-A- 3 561 195
- US-A- 5 954 035

## Description

### DOMAINE DE L'INVENTION

La présente invention est relative aux dispositifs de séparation d'éléments en suspension dans un gaz issu d'un carter de moteur à combustion interne. Le domaine d'application de l'invention concerne en particulier la séparation d'huile des gaz de carter dans les moteurs thermiques des véhicules routiers (ex : automobiles, poids lourds, motocyclette), bateaux ou moteurs thermiques industriels (groupe électrogène par exemple).

### ARRIERE-PLAN TECHNOLOGIQUE DE L'INVENTION

De manière connue en soi le carter est relié à l'admission d'air du moteur à combustion interne via un dispositif de séparation afin d'évacuer en continu les gaz de carter et d'en extraire l'huile en suspension. C'est ce qui est connu sous le nom de circuit de recyclage des gaz de carter ou gaz de blow-by par l'homme du métier. Différents moyens de séparer l'huile des gaz de carter sont employés dans l'art antérieur, parmi lesquels on peut distinguer les cyclones, les chicanes ou systèmes similaires à multiples changements de direction, les séparateurs centrifuges, les coalesceurs statiques et les coalesceurs dynamiques. On trouve également des systèmes séparateurs par impaction. Dans cette dernière famille, les systèmes comportent un ensemble de trous calibrés ou ouvertures d'accélération similaires faisant face à une plaque d'impaction. Les gaz de carter sont accélérés lors de leur passage dans les trous. Les gouttelettes d'huile sont alors accélérées et projetées contre la plaque d'impaction.

Dans les systèmes séparateurs par impaction qui présentent une plaque d'impaction, les gouttelettes d'huile projetées à vitesse élevée s'agglomèrent sur la surface de la plaque pour former un film d'huile. La vitesse est ensuite diminuée par élargissement de la section de passage et le film d'huile s'égoutte vers le système d'évacuation. Une variante consiste à fixer un feutre coalescent ou non tissé similaire sur la plaque d'impact afin de provoquer la coalescence des plus fines gouttelettes d'huile avant l'impact sur la plaque. Ceci a pour effet d'augmenter significativement l'efficacité de séparation de la phase aérosol d'huile. Les séparateurs à élément d'impaction offrent un meilleur compromis efficacité / perte de charge que les séparateur cycloniques. Cependant, la perte de charge de ces systèmes peut être élevée en cas de débit de gaz augmenté. C'est le cas en particulier en fin de vie d'un séparateur, le débit des gaz de carters étant typiquement plus élevé (par exemple double ou triple du débit nominal considéré pour un moteur neuf).

Dans la catégorie des coalesceurs dynamiques, la perte de charge est réduite grâce à l'effet centrifuge qui contribue à l'évacuation de l'huile hors du média. Cette mise en rotation permet d'ailleurs d'utiliser un média plus fermé et donc plus efficace tout en gardant une perte de charge acceptable. On se référera notamment au document FR 2 933 626 qui décrit un tel dispositif. Le document JP-H07-150924 A décrit un autre dispositif du même type. L'élément de rotor engagé dans l'espace intérieur de l'élément filtrant coopère typiquement avec l'un des deux flasques de l'élément filtrant. Cependant, l'autre flasque peut alors présenter un risque plus grand de rupture en raison des efforts de torsion (ces efforts tendant à décoller ce flasque par rapport au média filtrant).

Un autre inconvénient de ce genre de dispositif de séparation est que sa construction est plus complexe du fait de la mobilité des pièces et des impératifs d'étanchéité entre la zone en amont de l'élément filtrant où circulent les gaz de carter et la zone en aval où circulent les gaz épurés. L'assemblage sur l'arbre d'entraînement peut aussi s'avérer délicat.

Il existe donc un besoin pour des solutions robustes qui offrent un bon compromis efficacité / perte de charge, tout au long de la durée de vie du dispositif de séparation.

### OBJETS DE L'INVENTION

La présente invention a pour but de pallier un ou plusieurs des inconvénients susmentionnés en proposant un dispositif du type à impaction qui est plus efficace pour déshuiler des gaz issus d'un carter moteur.

A cet effet, l'invention concerne un dispositif d'épuration d'un gaz issu d'un carter de moteur à combustion interne, destiné à être interposé entre une amenée des gaz chargés et une conduite d'évacuation de gaz épurés, comprenant une unité de séparation permettant de séparer de l'huile du flux de gaz, cette unité de séparation comprenant :
- une paroi de transfert présentant au moins une ouverture de distribution accélérée, et de préférence plusieurs ouvertures de distribution accélérée, permettant au gaz circulant dans l'amenée de traverser la paroi de transfert ;
- une paroi de déviation de flux de gaz placée dans une zone de passage d'au moins un flux de gaz ayant traversé ladite au moins une ouverture de distribution accélérée, la paroi de déviation comprenant une première face en regard de la ou des ouvertures de distribution accélérée et une deuxième face opposée à la première face ;
l'unité de séparation étant tournante autour d'un axe longitudinal du dispositif et chaque ouverture de distribution accélérée définissant un accès axial à une chambre d'impaction délimitée entre la paroi de transfert et la première face de la paroi de déviation, cet accès axial étant formé du côté d'une première extrémité de l'unité de séparation et permettant de définir un sens d'arrivée du flux de gaz,
au moins une partie de la paroi de déviation étant agencée pour guider le flux de gaz suivant une orientation inverse du sens d'arrivée.

Ce type de configuration permet de cumuler trois effets qui se combinent avantageusement dans la chambre d'impaction :
- effet de concentration du gaz dans les ouvertures de distribution accélérée (avant l'impact), en raison de l'augmentation de la vitesse du gaz et du rapprochement des lignes de courtant ; cela augmente statistiquement les chances de rencontre et fusion entre les gouttelettes d'huile, étant entendu que les plus grosses gouttelettes seront plus faciles à séparer par la suite ;
- effet de déviation brutale par la première face d'impact de la paroi de déviation, de sorte que les gouttelettes d'huile les plus lourdes/grosses vont quitter les lignes de courant dans la chambre d'impaction.
- effet d'interférence dans le guidage centrifuge des gouttelettes d'huile par la présence d'obstacle(s) ou d'une pente obligeant un retour vers l'arrière, ce qui favorise le recueil d'un film d'huile sur des parois ; la vitesse de circulation du gaz étant réduite, c'est davantage l'effet centrifuge que l'entraînement dans les lignes de courant du gaz qui permet d'évacuer les particules liquides en dehors de la chambre d'impaction.

Dans une option préférée, chacune parmi la paroi de transfert et la paroi de déviation s'étend de façon annulaire autour de l'axe longitudinal de l'unité de séparation. La paroi de déviation peut présenter un bord externe distal de l'axe longitudinal, ce bord externe étant par exemple circulaire et centré sur l'axe longitudinal.

Selon une particularité, il est typiquement prévu au moins deux, de préférence au moins trois ouvertures de distribution accélérée, formant chacune un accès axial du côté de la première extrémité. Le nombre de ces ouvertures est typiquement compris entre 2 ou 3 et 20, de préférence entre 4 et 15.

Avec cet agencement de l'unité de séparation, il est permis d'augmenter significativement l'efficacité, ce qui est très intéressant en particulier pour les gouttelettes dont la taille caractéristique est inférieure au micron. Des tests relatifs au rendement de séparation ont pu montrer un accroissement de l'ordre de 5% à 10% de l'efficacité de séparation de telles gouttelettes dans les cas où l'impact des gouttelettes est réalisé contre une paroi de déviation qui est inclinée vers le côté d'arrivée du gaz brut et/ou guide le flux de gaz suivant un sens de retour au moins jusqu'au bord externe.

Par ailleurs, ce type de solution est robuste et peut présenter une certaine longévité, sachant qu'il n'est pas nécessaire d'utiliser un quelconque média poreux ou filtrant dans la chambre d'impaction.

Selon une particularité, l'une au moins parmi la paroi de déviation et la paroi de transfert présente une forme générale tronconique qui, en combinaison avec l'effet centrifuge lorsque l'unité de séparation est entraînée en rotation, permet de guider le flux de gaz radialement vers l'extérieur et avec une composante axiale en sens inverse du sens d'arrivée.

Selon une particularité, la paroi de déviation et la paroi de transfert sont chacune de forme générale tronconique et espacées axialement entre elles. Bien entendu, des portions d'extrémité et/ou des portions de ces parois qui sont décalées par rapport aux ouvertures de distribution accélérée peuvent localement être orientées différemment. Aussi, l'expression « forme générale tronconique » n'exclut pas des structures ondulées ou la présence de tronçons perpendiculaires à l'axe central de rotation.

On comprend que la paroi de déviation peut se rapprocher plus ou moins progressivement du côté d'arrivée du gaz brut, au fur et à mesure qu'on s'approche du bord distal. Dans une option, la paroi de déviation peut présenter seulement une face ou une portion de face formée de façon tronconique.

Selon une particularité, la première face de la paroi de déviation présente une surface d'impact pourvue de reliefs saillants vers l'arrière et/ou présentant une rugosité, sachant que la hauteur des reliefs ou des aspérités permettant de rendre rugueuse la surface d'impact est typiquement inférieure à 1 ou 2 mm, préférentiellement inférieure à 50 µm. La hauteur de ces reliefs ou aspérités est mesurée à partir d'un niveau de fond de la première face. Typiquement, ce niveau de fond est le niveau pour lequel la distance par rapport au débouché interne de l'ouverture d'accélération en regard est la plus grande. La présence d'aspérités améliore encore la séparation. On comprend que les reliefs de rugosité ont par exemple des dimensions submillimétriques qui ne modifient pas significativement l'écartement entre les parois délimitant la chambre d'impaction.

Selon une particularité, l'unité de séparation définit une zone de virage prononcée autour du bord externe distal, de façon à réorienter le flux de gaz suivant une direction générale centripète inclinée avant que le flux de gaz épuré ressorte de l'unité de séparation, par une ou plusieurs ouvertures débouchant radialement dans un conduit central centré sur l'axe longitudinal. Ceci est permis par l'inclinaison de la deuxième face de la paroi de déviation.

En raison de cette inclinaison, il est permis de créer en arrière de la paroi de déviation un volume annulaire dont l'extension radiale augmente progressivement en s'éloignant de la première extrémité où sont formées les ouvertures de distribution accélérée. Ce type d'agencement, dans le contexte d'un effet centrifuge pour séparer les gouttelettes d'huile vers l'extérieur, minimise l'effet de réentraînement des gouttelettes d'huile par le gaz.

Selon une particularité, la paroi de déviation a une forme tronconique de révolution caractérisée par un angle aigu, défini entre l'axe longitudinal et une direction de génératrice de la paroi de déviation, l'angle aigu étant compris entre 55 et 84°, de préférence entre 60 et 80°. La formation d'une pente permet de guider d'abord au flux de gaz de revenir en arrière (circulation en rebroussement) jusqu'à une zone concave de jonction entre une portion tubulaire formant une surface latérale externe du dispositif et la première extrémité du dispositif.

Dans une option, la pente caractérisée par l'angle aigu est définie par seulement une des deux faces de la paroi de déviation.

Dans divers modes de réalisation du dispositif d'épuration des gaz de carter selon l'invention, on peut éventuellement avoir recours en outre à une ou plusieurs des dispositions suivantes :
- la paroi de transfert a une forme tronconique de révolution caractérisée par un angle aigu qui est défini entre l'axe longitudinal et une direction de génératrice de la paroi de transfert, cet angle aigu étant compris entre 55 et 84°, de préférence entre 60 et 80°.
- l'unité de séparation définit deux compartiments séparés entre eux par la paroi de déviation à l'exception d'un passage annulaire adjacent au bord externe distal.
- les deux compartiments consistent respectivement en un premier compartiment définissant la chambre d'impaction et un deuxième compartiment annulaire, typiquement de plus grand volume que le premier compartiment et délimité par un flasque annulaire du côté opposé à la première extrémité.

- le deuxième compartiment débouche radialement vers l'intérieur d'une part, pour faire sortir le flux de gaz épuré de l'unité de séparation, et débouchant axialement à l'opposé de la première extrémité d'autre part, en regard du passage annulaire, afin de faire sortir des gouttelettes d'huile de l'unité de séparation.
- le dispositif comprend un manchon rigide central, creux et apte à être entraîné en rotation par un arbre moteur, le deuxième compartiment débouchant radialement vers l'intérieur du manchon rigide central pour faire sortir le flux de gaz épuré de l'unité de séparation.
- le manchon est typiquement métallique et comprend en outre une portion de raccordement à un arbre d'entraînement, une paroi transversale s'étendant entre une portion de conduite pour faire circuler des gaz et la portion de raccordement, et au moins un orifice axial dans la paroi transversale permettant le passage d'un organe d'attache allongé tel qu'une vis.
- l'unité de séparation comprend un couvercle, distinct de la paroi de déviation et définissant un volume interne dans lequel s'étend la paroi de déviation.
- la paroi de déviation et le couvercle sont rendus solidaires l'un de l'autre en rotation, par engagement de l'unité de séparation dans des crans du manchon.
- le couvercle comprend:
   - une première portion incluant la paroi de transfert et définissant la première extrémité de l'unité de séparation ;
   - une deuxième portion, de forme tubulaire, enveloppant latéralement la paroi de déviation et permettant de guider, depuis une zone adjacente au bord externe distal, de l'huile séparée du flux de gaz en direction opposée à la première extrémité.
- la deuxième portion s'étend entre une extrémité de raccordement à la première portion et une extrémité opposée annulaire délimitant tout ou partie d'une ou plusieurs ouvertures axiales de rejet d'huile.
- le dispositif comprend un élément de rotor destiné à l'entrainement en rotation de l'unité de séparation dans un état assemblé entre l'élément de rotor et l'unité de séparation, l'unité de séparation étant couplée à l'élément de rotor, de façon fixe en rotation et fixe en translation longitudinale, l'élément de rotor définissant la sortie axiale de gaz épuré du dispositif d'épuration.
- l'unité de séparation est creuse et s'étend autour d'un espace intérieur central, l'élément de rotor étant engagé dans l'espace intérieur contre une pluralité de surfaces de contact de l'unité de séparation dans l'état assemblé.
- l'élément de rotor comporte un manchon, rigide et de préférence monobloc, qui s'étend longitudinalement autour de l'axe longitudinal à l'état assemblé et présente une face externe sur laquelle sont formés N crans délimités chacun entre deux bords longitudinaux et permettant d'entraîner en rotation l'unité de séparation par engagement des surfaces de contact dans les crans, N étant un nombre entier supérieur ou égal à deux.
- l'unité de séparation comprend :
   - un premier élément d'une seule pièce formant la paroi de déviation et qui comporte un flasque, de forme annulaire, adapté pour s'engager contre une butée axiale du manchon ainsi qu'une partie d'ancrage qui s'étend du côté de l'espace intérieur longitudinalement autour du manchon ;
- un deuxième élément, typiquement sous la forme d'un couvercle, distinct du premier élément, réalisé d'une seule pièce et formant la paroi de transfert, le deuxième élément comprenant au moins un organe de retenue en prise avec la partie d'ancrage et permettant de rendre solidaires en rotation le premier élément et le deuxième élément.
- la partie d'ancrage est apte à s'engager dans les crans en butant axialement contre le deuxième élément du côté de la chambre d'impaction.
- la partie d'ancrage présente N moyens d'engagement en saillie radialement vers l'intérieur pour s'engager de façon ajustée dans les N crans, de façon à former des premières surfaces de contact espacées, qui font partie de ladite pluralité de surfaces de contact de l'unité de séparation.
- le deuxième élément définit au moins deux organes de retenue en prise avec la partie d'ancrage et qui définissent des deuxièmes surfaces de contact de la pluralité de surfaces de contact.
- le manchon comprend une portion de conduite conçue pour faire circuler un flux de gaz dans l'espace intérieur depuis une face interne de l'unité de séparation vers une sortie axiale de gaz épuré, la portion de conduite faisant saillie axialement vers l'extérieur depuis le flasque (dans les options de raccordement sur les crans du manchon, les contacts entre les pièces peuvent être réalisés à distance de la portion de conduite, ce qui permet à la section axiale de passage définie par le manchon d'être peu différente de la section de l'espace intérieur (typiquement sans réduire par deux le diamètre de passage), et de préférence plus large ou au moins aussi large que la section à l'extrémité de l'arbre d'entraînement).
- le ou les organes d'accrochage s'étendent à l'état assemblé à distance de la portion de conduite.
- l'unité de séparation présente un corps qui comporte :
   - un flasque annulaire en regard de la deuxième face de la paroi de déviation ;
   - la paroi de déviation ; et
   - une paroi latérale tubulaire ajourée qui s'étend autour de l'axe longitudinal entre le flasque annulaire et la paroi de déviation.
- le corps est réalisé d'une pièce.
- la chambre d'impaction communique avec un espace intérieur, délimité par la paroi latérale du corps, successivement par :
   - une première zone annulaire s'étendant autour de la paroi de déviation et adjacente au bord externe distal de la paroi de déviation ;
   - une deuxième zone annulaire, délimitée entre le flasque annulaire et la deuxième face de la paroi de déviation, le long de la paroi latérale ; et
   - une pluralité d'ouvertures de passage radial, définies dans la paroi latérale du corps entre la paroi de déviation et le flasque annulaire ;
   ce grâce à quoi, le flux de gaz est acheminé de façon centripète entre la première zone annulaire et l'espace intérieur.
   - la distance axiale minimale entre le flasque annulaire et la paroi de déviation est supérieure à une distance axiale entre la paroi de transfert et la première face de la paroi de déviation.
   - le dispositif comprend une sortie d'huile et une sortie de gaz épuré, l'unité de séparation comprenant une partie périphérique en regard du bord externe permettant de définir, entre la partie périphérique et la deuxième face de la paroi de déviation, une chambre qui communique :
      - avec la sortie d'huile formée dans ou adjacente à la partie périphérique d'une part ;
      - et avec la sortie de gaz épuré, plus proche de l'axe longitudinal que la sortie d'huile, d'autre part.
   - la paroi de déviation délimite une zone concave en regard d'une ouverture de distribution accélérée, de préférence en incluant au moins une projection en saillie vers la première extrémité depuis la première face.

Il est également proposé un système de traitement d'un gaz issu d'un carter de moteur à combustion interne, comprenant le dispositif d'épuration selon l'invention, le système comprenant :
- un élément de rotor permettant l'entrainement en rotation de l'unité de séparation dans un état assemblé entre l'élément de rotor et l'unité de séparation,
- un arbre d'entraînement en rotation qui définit un axe de rotation et présente une extrémité d'ancrage pour fixer l'élément de rotor avec un même alignement selon l'axe de rotation qui coïncide sensiblement avec l'axe longitudinal de l'unité de séparation ;
- un élément de canalisation qui comporte une entrée pour l'admission de gaz non traités, une sortie pour évacuer les gaz traités, et un passage pour l'arbre d'entraînement aligné avec l'axe de rotation, l'extrémité d'ancrage s'étendant dans un espace intérieur de l'unité de séparation en étant entourée par une portion de raccordement de l'élément de rotor ; et
- deux moyens de butée opposés formés respectivement sur l'arbre d'entrainement et l'élément de rotor, de préférence à l'extérieur de l'espace intérieur, permettant à l'unité de séparation d'être bloquée axialement par rapport à l'arbre d'entraînement lorsque l'élément de rotor est fixé à l'extrémité d'ancrage.

Le système peut être robuste, compact, et efficace pour séparer les particules liquides d'huile formées après l'impact sur la paroi de déviation. Les lignes de courant pour le gaz sont fortement recourbées et convergent vers l'axe longitudinal suivant une circulation centripète du flux de gaz, ce qui diffère fortement du cheminement des gouttelettes d'huile.

Selon une particularité, l'arbre d'entraînement peut supporter directement un dispositif d'épuration réalisé essentiellement en trois pièces : le couvercle extérieur qui définit la paroi de transfert, l'élément de rotor interne et le corps logé dans le volume interne du couvercle en venant se fixer sur des crans de l'élément de rotor. Le corps définit la paroi de déviation qui sépare le premier compartiment annulaire, formant la chambre d'impaction, du second compartiment permettant de rediriger vers l'axe le flux de gaz. Un flasque de fermeture formé par ce corps permet d'obturer le volume interne du couvercle à l'opposé de la paroi de transfert.

On comprend qu'il n'y a pas besoin de pièces d'interconnexion complexes et les liaisons mécaniques peuvent toutes être réalisées du côté de l'espace intérieur de l'unité de séparation (en évitant un encombrement additionnel sur une surface externe de l'unité de séparation), sans réduire significativement la section de passage pour les gaz quittant l'unité de séparation.

Il est également proposé une méthode d'assemblage pour obtenir une position fonctionnelle du dispositif d'épuration permettant de séparer un gaz issu d'un carter de moteur à combustion interne. Plus particulièrement, il est prévu une méthode d'assemblage sur un arbre d'entraînement d'un dispositif d'épuration selon l'invention, le dispositif d'épuration comprenant un élément rotor pour supporter l'unité de séparation, le procédé comprenant les étapes consistant essentiellement à :
- fournir un corps réalisé d'une pièce qui inclut la paroi de déviation, et un couvercle (de préférence sensiblement en forme de cloche) qui définit la première extrémité et la paroi de transfert, afin de former l'unité de séparation par insertion de la paroi de déviation dans un volume interne de l'unité de séparation (volume interne pouvant optionnellement être directement défini par le couvercle) ;
- fixer l'élément de rotor sur l'arbre d'entraînement par des moyens de fixation, de façon à verrouiller en translation longitudinale et en rotation une position d'engagement de l'arbre d'entraînement dans un logement interne défini par une portion de raccordement formée dans l'élément de rotor, l'élément de rotor présentant, autour de l'arbre d'entraînement, une face externe pourvue de crans longitudinaux ; et
- assembler le dispositif d'épuration en interconnectant l'unité de séparation et l'élément de rotor, par insertion de l'élément de rotor dans un espace intérieur creux de l'unité de séparation et engagement, dans lesdits crans, de reliefs appartenant à l'un et/ou à l'autre du corps et du couvercle, jusqu'à obtenir une relation bloquée en rotation de l'unité de séparation et de l'élément de rotor.

### BREVE DESCRIPTION DES DESSINS

D'autres caractéristiques et avantages de l'invention apparaîtront au cours de la description suivante de plusieurs modes de réalisation, donnés à titre d'exemples non limitatifs, en regard des dessins joints dans lesquels :
- la figure 1 est une vue en coupe d'un dispositif d'épuration selon un mode de réalisation conforme à l'invention ;
- la figure 2 est une vue en perspective d'un couvercle appartenant au dispositif de la figure 1 ;
- la figure 3 est une vue en perspective d'un corps d'impaction destiné à être assemblé avec le couvercle de la figure 2, autour d'un élément de rotor, afin de former le dispositif d'épuration de la figure 1 ;
- la figure 4 est une vue en perspective éclatée du dispositif d'épuration de la figure 1 ;
- la figure 5A est une coupe du dispositif d'épuration de la figure 1, permettant d'illustrer le trajet du gaz depuis la chambre d'impaction jusqu'au creux du manchon central défini par l'élément de rotor.
- la figure 5B est une coupe du dispositif d'épuration de la figure 1, parallèle à la coupe de la figure 5A, illustrant un mode d'encliquetage entre le couvercle et une partie d'ancrage appartenant au corps d'impaction,
- la figure 6 est une vue en coupe verticale d'un système de traitement de gaz de carter qui permet de faire tourner une unité de séparation, par un accouplement entre un arbre moteur et le manchon central qui supporte l'unité de séparation ;
- la figure 7 illustre en coupe une variante de réalisation de la paroi de déviation ;
- la figure 8A est un diagramme montrant le rendement ou efficacité de la séparation en fonction d'une taille moyenne de gouttelettes liquides présentes dans le flux de gaz avant le traitement dans un séparateur à impaction de type rotatif, pour une vitesse de rotation de 1500 tr/min.
- la figure 8B est un diagramme complètement similaire à celui de la figure 8A, lorsque la vitesse de rotation, plus élevée, est de l'ordre de 6000 tr/min.

### DESCRIPTION DES MODES DE REALISATION PREFERES DE L'INVENTION

Sur les différentes figures, des références identiques indiquent des éléments identiques ou similaires.

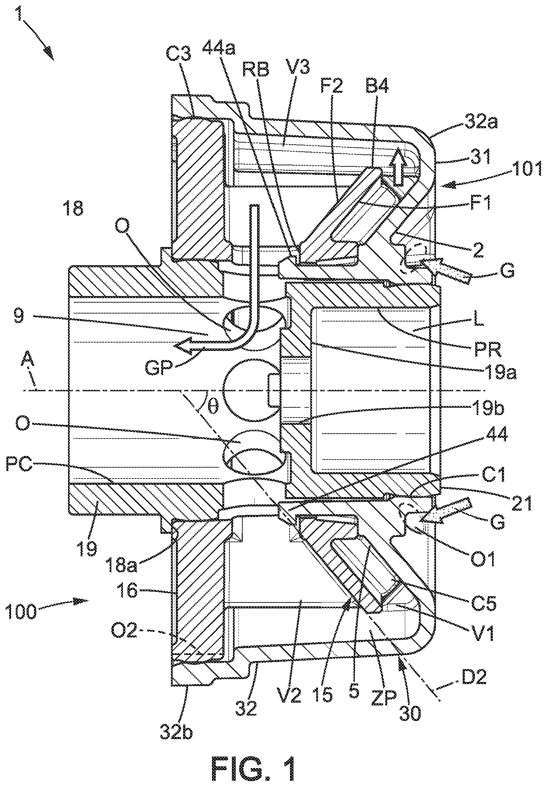

En référence aux figures 1 à 3 et 6, le dispositif d'épuration 1 permet de séparer les parties liquides (et éventuellement solides) des gaz issus du carter de moteur à combustion interne et qui sont directement issues du carter. Le dispositif d'épuration 1 présente une unité de séparation 100 supportée par un élément rotor 18, ici défini par un manchon central 19 réalisé d'une seule pièce.

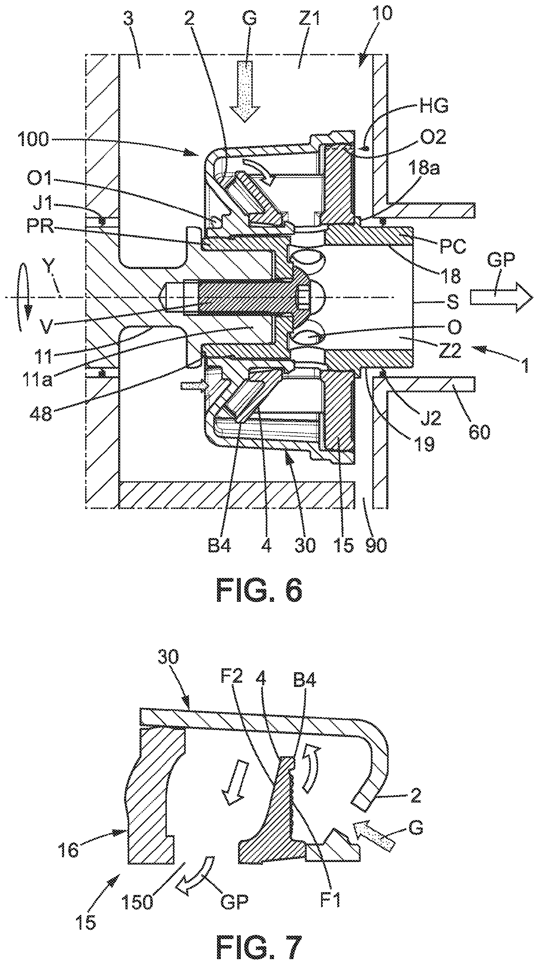

Comme bien visible sur la figure 6, le dispositif d'épuration 1 est typiquement accouplé à un arbre moteur 11 pour définir un système de traitement 10 du gaz brut G par séparation des particules d'huile. Le dispositif d'épuration 1 peut alors être interposé entre une amenée 3 des gaz chargés (gaz brut G) et une conduite 60 d'évacuation de gaz épurés GP. Cette conduite 60 se raccorde à ou forme tout ou partie d'une liaison rejoignant l'admission d'air.

Le dispositif d'épuration 1 s'étend dans un boîtier ou un tronçon de conduit, ici destiné à faire circuler de l'air en direction de l'injection du moteur. Ce tronçon de conduit comporte en général un côté d'entrée ou d'amenée 3 pour l'admission de gaz non traités G et une sortie S pour évacuer les gaz traités GP. Le tronçon de conduit fait partie d'un sous-ensemble de moteur qui présente un passage pour l'arbre d'entraînement 11 aligné avec l'axe Y de rotation.

Comme illustré à la figure 6, afin de faire passer un fluide de la zone amont Z1 qui communique avec le carter moteur à la zone aval Z2, le flux de gaz doit nécessairement passer à travers l'unité de séparation 100, en traversant des orifices de distribution accélérée O1 du côté d'une première extrémité 101, et en s'échappant le long d'un axe longitudinal A qui forme typiquement un axe de symétrie de l'unité de séparation 100. Dans les options de réalisation des figures, l'unité de séparation 100 présente un creux central, appelé dans ce qui suit espace intérieur 9. L'élément de rotor 18 s'étend dans cet espace intérieur creux et peut par exemple traverser l'unité de séparation 100 d'une première extrémité 101 à une autre extrémité définie ici par un flasque 16 annulaire.

Le dispositif d'épuration 10 est monté à l'extrémité 11a d'un arbre 11 qui est mis directement ou indirectement en rotation (pignon) par un quelconque organe d'entraînement en rotation du carter de distribution, tel que le vilebrequin, l'arbre à cames ou le tendeur de chaîne. L'entraînement en rotation peut également être obtenu par un des organes lié à la distribution, comme par exemple une poulie, la pompe haute-pression à gazole, l'alternateur, le compresseur de climatisation, la pompe à eau. L'entraînement peut encore être réalisé par un moteur électrique (non représenté) indépendant du moteur à combustion interne ou par un moteur hydraulique lié à la pression d'huile.

L'axe de rotation Y défini par l'arbre 11 peut être horizontal ou vertical; on comprend qu'il peut présenter le cas échéant une toute autre orientation. L'élément de rotor 18 comporte un manchon 19, ici monobloc, qui est destiné à prolonger l'arbre 11 dans la direction longitudinale définie par l'axe de rotation Y. L'élément de rotor 18 peut aussi optionnellement comporter des éléments d'étanchéité, assemblés à une extrémité du manchon et/ou entourant une portion de surface externe du manchon 19.

Le manchon 19 qui constitue ici l'essentiel de l'élément de rotor 18 est typiquement rigide, de préférence métallique ou à base d'un matériau plastique ou composite non flexible. Ce manchon 19 comprend une portion PR de raccordement à l'arbre 11 d'entraînement. L'extrémité 11a de l'arbre d'entraînement 11 s'étend dans l'espace intérieur 9 en étant entourée par la portion de raccordement PR.

La portion PR comprend une paroi transversale 19a qui forme, du côté opposé à l'arbre 11, le fond d'une portion de conduite PC pour faire circuler des gaz. La paroi transversale 19a forme également le fond de la portion PR de raccordement, du côté de l'arbre 11. La portion PR de raccordement définit ici un logement L délimité par une portion tubulaire d'extrémité 21. Au moins un orifice axial 19b est prévu dans la paroi transversale 19a pour le passage d'un organe d'attache allongé tel qu'une vis V.

Bien que la figure 6 montre le cas d'une vis V séparable d'un logement fileté formé à l'extrémité 11a de l'arbre 11, on peut aussi prévoir une tige filetée à l'extrémité 11a, qui coopère avec un écrou. La tête de vis ou l'écrou s'étendent dans le creux défini par la portion de conduite PC et le manchon 19 peut être maintenu ainsi solidaire de l'arbre 11 (solidaire en rotation et sans possibilité de déplacement axial). Dans des alternatives, on peut utiliser un autre mode de fixation entre le manchon 19 et l'extrémité 11a, utilisant des organes d'attache connus en soi (le cas échéant en utilisant des ergots ou pattes radiales, par exemple avec un raccordement de type baïonnette, ce qui peut permettre de supprimer la paroi transversale 19a).

Dans l'exemple de la figure 6, un joint dynamique J2 en contact avec la portion de conduite PC forme une interface (avec étanchéité tournante) entre la partie stator et la partie rotor, permettant de séparer la zone amont Z1 de la zone aval Z2. Dans la zone aval Z2, les gaz traités GP circulent dans la portion de conduite PC et rejoignent une sortie S qui communique avec l'admission d'air, par exemple sans déviation additionnelle. L'unité de séparation 100 peut être démontée en déconnectant l'élément de rotor 18 de l'arbre 11. Ainsi, la sortie S est ici définie dans une partie amovible, avec par exemple la possibilité de retirer la conduite 60 lorsque celle-ci appartient à une partie, par exemple un couvercle, séparable du reste du tronçon de conduit logeant le dispositif 10. Le joint dynamique J2 peut faire partie de ce couvercle. Un autre joint dynamique J1, placé à l'opposé du joint dynamique J2, enserre l'arbre 11 qui traverse une paroi perpendiculaire à l'axe de rotation Y. Ce type d'intégration est seulement illustratif et il est permis d'intégrer autrement le dispositif d'épuration 1 dans un circuit de gaz de carter.

L'arbre 11 présente une extrémité d'ancrage 11a pour fixer l'élément de rotor 18 suivant un même alignement. L'unité de séparation 100 est supportée par l'élément de rotor 18 en s'étendant autour de l'axe longitudinal A qui coïncide sensiblement avec l'axe Y de rotation.

L'unité de séparation 100 va à présent être décrite plus en détail en référence aux figures 1 à 3.

Comme bien visible sur la figure 1, l'unité de séparation 100 qui est supportée par le manchon central 19 peut comporter au moins deux pièces qui se fixent l'une à l'autre pour définir deux compartiments V1, V2, dans le volume intérieur V3 de l'unité de séparation 100. Ces deux pièces principales sont ici un corps 15, qui s'étend depuis un flasque 16 annulaire jusqu'à une paroi de déviation 4, et un couvercle 30 qui recouvre extérieurement la paroi de déviation 4. Ces deux pièces sont rigides pour l'essentiel.

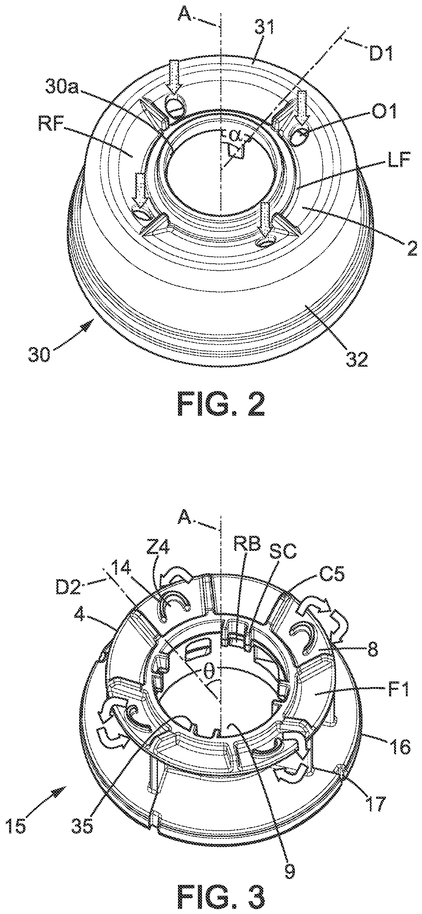

En référence aux figures 1 et 2, le couvercle 30 présente une ouverture centrale 30a formée dans une première portion 31, ici annulaire, qui définit une première extrémité 101 de l'unité de séparation 100. Le couvercle 30 comprend également une deuxième portion 32, de forme tubulaire, qui s'étend entre une extrémité annulaire 32a de raccordement à la première portion 31 et une extrémité opposée annulaire 32b.

L'extrémité annulaire 32b est en contact étanche annulaire, par exemple par un contact radial C3 généralement circulaire, avec un bord externe du flasque 16. Le contact radial C3 est cependant discontinu car interrompu dans des zones étroites, en raison de la présence de rainures 17 définies dans le bord externe du flasque 16 comme illustré sur la figure 3. De telles rainures 17, ici au nombre de quatre, sont réparties sur la circonférence du flasque 16 pour délimiter une partie des ouvertures axiales O2 de rejet d'huile.

Le flasque 16 est aussi en contact étanche annulaire, par exemple par un contact radial C2 généralement circulaire, avec un bourrelet annulaire 25 du manchon 19. Le contact radial C2 est continu. Du côté d'une face interne de la première portion 31, il est permis de réaliser un autre contact radial C1 généralement circulaire contre le manchon 19, plus particulièrement contre la face externe de la portion tubulaire d'extrémité 21 qui traverse axialement l'ouverture centrale 30a. Un bourrelet 26 formant une surface annulaire d'étanchéité peut être prévu pour réaliser le contact radial C1. Entre ces zones de contact continues C1 et C2, la zone en aval Z2 est bien séparée de façon étanche de la zone amont Z1.

En référence à la figure 3, le corps 15 définit la paroi de déviation 4 qui présente ici une extension radiale inférieure à celle du flasque 16. Les bords internes du flasque 16 et de la paroi de déviation 4 peuvent définir chacun un diamètre interne similaire et optionnellement identique. Lorsque le manchon 19 s'insère du côté du flasque 16, par l'ouverture centrale de ce dernier, il peut être prévu de réduire légèrement le diamètre interne de la paroi de déviation 4 par rapport au diamètre interne du flasque 16 annulaire.

La paroi de déviation 4 est typiquement de forme générale tronconique, de façon à définir une première face F1 orientée vers l'axe longitudinal A du côté de l'arrivée du gaz brut G (face F1 annulaire concave de ce côté d'arrivée). La paroi de déviation 4 présente un bord externe B4 distal de l'axe longitudinal A et qui se rapproche du côté d'arrivée du gaz brut G.

La paroi de transfert 2 définie dans la première portion 31 peut également présenter une forme générale tronconique, par exemple en étant sensiblement parallèle à la paroi de déviation 4. Ces parois 2 et 4 sont ainsi espacées axialement entre elles pour délimiter une chambre d'impaction 5.

L'intégration de la paroi de déviation 4 entièrement dans le volume interne V3 délimité par le couvercle 30 permet de séparer l'un de l'autre les deux compartiments V1 et V2. Le gaz circule du premier compartiment V1 incluant la chambre d'impaction 5 vers le deuxième compartiment V2 par la zone de passage annulaire ZP adjacente au bord externe distal B4. Le bord B4 peut être circulaire et à distance radiale constante de la deuxième portion 32 du couvercle 30.

Le corps 15 présente ici une paroi latérale ajourée 15a, tubulaire, qui s'étend autour de l'axe longitudinal A entre le flasque 16 et la paroi de déviation 4. La paroi latérale ajourée 15a présente des ouvertures 150 qui permettent au deuxième compartiment V2 de communiquer avec l'espace intérieur 9. Ces ouvertures 150 sont placées au même niveau qu'une portion intermédiaire du manchon 19 où l'on trouve une ou plusieurs ouvertures radiales O, comme illustré sur la figure 1.

La disposition relative du corps 15 par rapport au couvercle 30 permet de former deux débouchés pour le deuxième compartiment V2, du côté opposé à la première extrémité 101 de l'unité de séparation 100 (donc à l'opposé du côté d'arrivée du gaz non traité G). Le deuxième compartiment V2 débouche ainsi radialement vers l'intérieur d'une part (via les ouvertures 150), pour faire sortir le flux de gaz épuré GP de l'unité de séparation 100, et débouche axialement à l'opposé de la première extrémité 101 d'autre part, en regard de la zone de passage annulaire ZP, afin de faire sortir des gouttelettes d'huile HG de l'unité de séparation 100. La force centrifuge forme en effet un film d'huile sur la face interne de la deuxième portion 32 du couvercle 30. Pour faciliter l'évacuation des gouttelettes d'huile HG, la deuxième portion 32 peut s'élargir progressivement en direction du flasque 16, de sorte que la force centrifuge contribue au déplacement des gouttelettes d'huile vers l'extrémité la plus éloignée de l'axe longitudinal A.

On peut aussi voir que le flasque 16 est ici en regard d'une deuxième face F2 de la paroi de déviation 4 qui définit une pente ayant un effet de guidage progressif du flux de gaz épuré GP vers les ouvertures 150. Cette configuration de la face F2 permet d'accroître progressivement la dimension radiale du volume annulaire du deuxième compartiment V2 et de minimiser l'effet indésirable de réentraînement de particules d'huile plaquées contre la deuxième portion 32 par des lignes de courant de gaz non centripètes.

Le corps 15 est ici monobloc pour minimiser les contacts d'étanchéité. Optionnellement, la paroi de déviation 4 présente une certaine rugosité, préférentiellement des micro reliefs inférieurs à 50 µm (par exemple entre 1 ou 2 µm et 45 ou 50 µm), ou encore elle peut éventuellement présenter une surcouche conformée en plaque ou revêtement et rapportée dans la chambre d'impaction 5, par exemple pour augmenter la rugosité de la surface d'impact et/ou pour définir un média poreux, fibreux de type non tissé. La formation de reliefs directement sur la paroi de déviation 4 simplifie la conception (par exemple avec un simple moulage de la paroi de déviation 4, en utilisant une ou plusieurs zones du moule traitées par électro-érosion), le corps 15 étant une pièce en matière plastique ou éventuellement autre matière moulable injectée.

Dans une forme de réalisation, on obtient une rugosité de la ou les surfaces d'impact définies par la paroi de déviation 4 par une opération de sablage du moule d'injection. Dans la paroi de déviation 4, la surface en vis-à-vis de la paroi de transfert 2 peut éventuellement être entièrement rugueuse.

Quel que soit le mode d'obtention d'une surface rugueuse de la paroi de déviation 4 (du côté de la chambre d'impaction 5), les reliefs pour obtenir la rugosité ont typiquement des dimensions submillimétriques.

Dans l'exemple illustré, la chambre d'impaction 5 peut être cloisonnée de façon à se décomposer en plusieurs secteurs angulaires d'impaction 8. Pour cela, comme montré sur la figure 3, le corps 15 présente par exemple une paroi de déviation 4 qui présente des nervures C5, en saillie sur la première face F1 en direction de la première extrémité 101 et réparties régulièrement.

En complément ou indépendamment de ce type de cloisonnement, la paroi de déviation 4 peut en outre délimiter une zone concave Z4 en regard d'une ou plusieurs des ouvertures de distribution accélérée O1, typiquement en incluant au moins une projection 14 en saillie vers la première extrémité 100 depuis la première face F1. La projection 14 présente ici un profil arqué en « C » ou « U » qui permet un effet de rallongement du trajet des gouttelettes liquides formées par l'impaction avant de rejoindre la deuxième portion 32.

En référence à la figure 7, on peut voir que la paroi de déviation 4 peut présenter une orientation générale différente entre sa première face F1 délimitant la chambre d'impaction et la deuxième face F2 délimitant le deuxième compartiment V2. Par exemple la première face F1 peut être sensiblement perpendiculaire à l'axe longitudinal A, à l'exception éventuelle d'un relief adjacent au bord externe distal B4. La deuxième face F2 peut en revanche présenter un profil tronconique. Ici, la première face F1 peut présenter des aspérités conférant une rugosité élevée. Ceci permet d'améliorer l'efficacité de séparation, par comparaison avec une surface d'impaction lisse. Les reliefs illustrés sur cette figure 7 sont quelque peu exagérés pour les besoins de l'illustration, sachant que l'extension de chaque relief en direction de l'ouverture de distribution accélérée est généralement submillimétrique et par exemple de l'ordre de moins de 50 ou 100 µm.

Comme dans le cas de la figure 1, on comprend que la chambre d'impaction 5 peut communiquer avec l'espace intérieur 9 délimité par la paroi latérale 15a, successivement par :
- une première zone annulaire ZP, s'étendant autour de la paroi de déviation 4 et adjacente au bord externe B4 ;
- une deuxième zone annulaire, délimitée entre le flasque 16 et la deuxième face F2 de la paroi de déviation 4, le long de la paroi latérale 15a ; et
- une pluralité d'ouvertures 150 de passage radial, définies dans la paroi latérale 15a entre la paroi de déviation 4 et le flasque 16.

Ceci permet d'acheminer le flux de gaz de façon centripète entre la première zone annulaire ZP et l'espace intérieur 9, de préférence en réduisant significativement la vitesse de ce flux par rapport à la vitesse accélérée permettant l'impaction sur la paroi de déviation 4.

Dans une forme de réalisation particulière, le corps 15 peut éventuellement résulter d'un assemblage d'au moins deux pièces, le cas échéant avec une fixation permanente comme une soudure. Dans une autre option, les parois 2 et 4 sont assemblées entre elles par soudure ou autre type de fixation permanente et le flasque 16 se raccorde par encliquetage à l'ensemble soudé. Dans ce cas on peut prévoir que les organes de retenue 44, 45 soit formés du côté du flasque 16, tandis que les reliefs 38 sont formés sur l'ensemble soudé couvercle - paroi de déviation. Plus généralement, on comprend que l'unité de séparation 100 peut être réalisée de différente façon afin de définir les compartiments V1 et V2 ainsi que les parois 2 et 4.

Un mode optionnel d'assemblage avec étanchéité de l'unité de séparation 100 sur l'élément de rotor 18 va à présent être décrit en référence aux figures 1, 4, 5A-5B et 6.

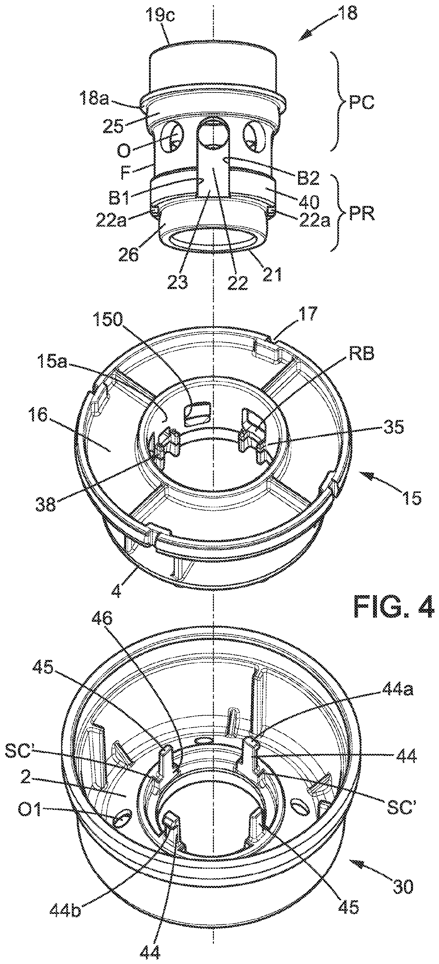

Comme illustré sur la figure 4, l'élément de rotor 18 peut être défini par ou peut comporter un manchon 19 réalisé d'une pièce dont la partie de conduite PC est tubulaire et centrée sur l'axe de rotation Y dans la position d'assemblage du dispositif d'épuration 10. Un tel manchon 19 peut comporter, dans sa portion de conduite PC, une extrémité saillante 19c qui s'étend du côté externe par rapport au flasque 16 annulaire et plusieurs ouvertures radiales O qui s'étendent du côté interne par rapport au flasque 16. De telles ouvertures radiales O sont positionnées dans une zone annulaire intermédiaire qui s'étend entre l'extrémité 19c et la paroi transversale 19a. Une large ouverture pour les gaz est définie à l'extrémité 19c, de sorte que la portion de conduite PC est conçue pour faire circuler un flux de gaz dans l'espace intérieur 9. L'extrémité 19c définit ici une sortie de gaz traités GP.

Dans l'état monté permettant la rotation, l'extrémité 11a de l'arbre 11 remplit le logement L et est en contact radial avec la face interne de la portion tubulaire d'extrémité 21 du manchon 19. Le manchon 19 forme l'interface d'accouplement en rotation de l'élément de rotor 18, et présente pour cela une face externe F pourvue de reliefs permettant de se relier à l'unité de séparation 100 avec un blocage en rotation. Ces reliefs s'étendent de préférence au moins sur l'extérieur de la portion PR de raccordement.

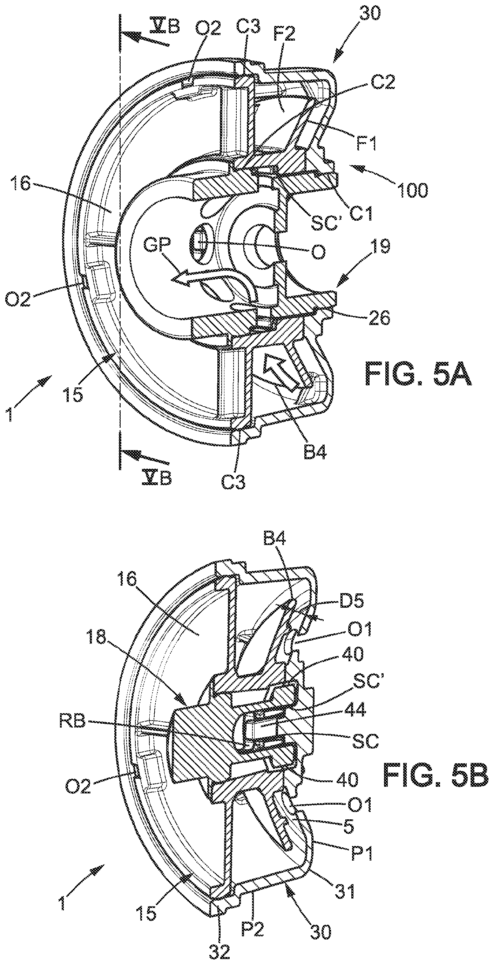

En référence aux figures 1, 5A-5B et 6, lorsque l'élément de rotor 18 est engagé dans l'espace intérieur 9 contre une pluralité de surfaces de contact SC, SC', par les reliefs de la face externe F du manchon 19, l'unité de séparation 100 peut tourner sans jeu relatif par rapport à l'élément de rotor 18. Les surfaces de contact SC, SC' montrées sur les figures 5A-5B sont définies par des reliefs qui sont typiquement répartis de façon discontinue autour de l'axe central A. La portion PR de raccordement peut aussi permettre, optionnellement à elle seule, d'empêcher la circulation de gaz en direction de l'extrémité 11a, par exemple en définissant avec l'unité de séparation 100 une zone d'étanchéité annulaire dans l'espace intérieur 9.

Dans l'exemple illustré, les reliefs de la face externe du manchon 19 permettent de définir un nombre N de crans 22 délimités chacun entre deux bords longitudinaux B1, B2 (N étant un nombre entier supérieur ou égal à deux). Ces crans 22 permettent d'entraîner en rotation l'unité de séparation 100 par engagement des surfaces de contact SC, SC' dans les crans 22. Les surfaces de contact SC, SC' sont dissociées entre un premier groupe de surfaces de contact SC définies par le corps 15 et un deuxième groupe de surfaces de contact SC' définies par le couvercle 30.

En référence à la figure 4, on peut voir que la face externe F du manchon 19 présente des crans 22 qui comportent chacun une surface de fond 23, de préférence sensiblement plane. Les crans 22 s'étendent ici parallèlement à l'axe central A entre une paire de bords longitudinaux B1, B2 (dans un état assemblé du manchon 19 avec l'unité de séparation 100). Bien que quatre crans 22 soient prévus dans l'exemple illustré, un nombre inférieur de crans, par exemple deux, peut être suffisant. Un nombre N supérieur peut aussi convenir, de préférence sans dépasser huit crans 22.

Une section en U de la face interne des crans 22, avec typiquement deux angles droits, correspond à un bon compromis entre le besoin de robustesse du manchon 19 et l'effet de prise entre les surfaces de contact SC et SC' (ici anguleuses) et le manchon 19. D'autres formes de surface avec complémentarité de profil (par exemple forme convexe s'insérant dans une forme concave complémentaire du cran 22) conviennent aussi dans des variantes de réalisation.

Pour ce qui concerne le corps 15, celui-ci vient à la fois s'engager :
- en prise axialement contre une butée axiale 18a formée par un collet ou au moins un relief fonctionnellement similaire de l'élément de rotor 18 ; et
- dans les crans 22, par N reliefs d'une partie d'ancrage 35 formée dans la paroi ajourée 15a.

Comme illustré sur les figures 4 et 5B, le manchon 19 peut comporter selon une option des portions de collet 40 formées dans une zone annulaire (zone localement élargie), ici distante de la portion de conduite PC. Cette zone annulaire peut être prolongée axialement par une extension ou extrémité tubulaire 21 plus étroite sur laquelle est formé le bourrelet 26. Les portions de collet 40 permettent de rehausser localement les bords longitudinaux B1 et B2 par rapport à la surface de fond 23 des crans 22, ce qui rend la liaison mécanique à effet anti-rotation plus robuste.

Pour ce qui concerne le couvercle 30, celui présente un ou plusieurs organes de retenue 44, 45 en prise avec la partie d'ancrage 35, typiquement par encliquetage, tout en venant se positionner dans tout ou partie des crans 22. Plus généralement, il est prévu une configuration d'interconnexion entre le couvercle 30 et le corps 15 qui permet de former une unité de séparation 100 qui est accouplée en rotation au manchon 19 de l'élément de rotor 18. Il n'y a pas de mobilité relative selon la direction de l'axe longitudinal A entre le couvercle 30 et le corps 15 grâce à l'encliquetage, qui est préférentiellement réalisé dans une zone de venue en prise dans les crans 22.

Les reliefs de la partie d'ancrage 35 viennent typiquement buter contre la première portion 31 du couvercle 30, du côté de la chambre d'impaction 5. Ainsi, la partie d'ancrage 35 peut être engagée axialement entre la première portion 31 et une surface de butée opposée définie par exemple par un ergot 44a de tout ou partie des organes d'accrochage 44. Ici l'ergot 44a est radialement saillant vers l'intérieur pour venir s'appuyer contre un rebord de prise RB formé dans une fente ou une ouverture 150 de la paroi latérale ajourée 15a, comme bien visible sur les figures 1 et 5B.

Bien que l'exemple illustré montre un corps 15 ayant un rebord de prise et un couvercle 30 définissant la première extrémité 101 et pourvu d'organes d'accrochage 44, 45 dont une partie au moins est du type élastiquement déformable, on comprend que les moyens d'assemblage peuvent être inversés en totalité ou partiellement. Par exemple, le couvercle 30 peut présenter un rebord de prise sur lequel peut s'engager un ergot formé sur le corps (l'ergot étant dans ce cas typiquement orienté suivant la direction axiale opposée).

En référence à la figure 6, à l'état assemblé pour permettre l'entraînement par l'arbre 11 moteur, l'unité de séparation 100 est prise en étau entre deux moyens de butée opposés 48, 18a formés respectivement sur l'arbre d'entrainement 11 et l'élément de rotor 18, de préférence à l'extérieur de l'espace intérieur 9. L'unité de séparation 100 est ainsi bloquée axialement par rapport à l'arbre d'entraînement 11 lorsque l'élément de rotor 18 est fixé à l'extrémité d'ancrage 11a. Ceci est avantageux car il n'est alors pas nécessaire de prévoir des pattes ou organes de retenue particulièrement robustes pour la retenue axiale entre le corps 15 et le couvercle 30 et/ou le nombre de pattes peut être réduit (un seul organe de retenue pouvant éventuellement suffire).

Dans l'exemple non limitatif des figures 1 et 4, quatre organes de retenue 44, 45 qui s'étendent ici à distance de la portion de conduite PC en entourant la portion de raccordement PC, définissent les surfaces de contact SC' du deuxième groupe pour la liaison mécanique avec le manchon 19. Plus particulièrement, chacun des organes de retenue 44, 45 peut comporter une portion rigide 46 d'indexation en rotation, adaptée pour remplir une extrémité 22a des crans 22 dans l'état assemblé, par exemple entre les portions de collet 40. La portion rigide 46 présente typiquement deux arêtes vives (ici par liaison entre des faces adjacentes disposées à un angle de 90° l'une par rapport à l'autre ; plus généralement et de manière non limitative, deux connexions de surface avec un angle non supérieur à 90 ou 100° peuvent permettre de définir les surface de contact anguleuses SC et SC').

Ainsi chacun des organes de retenue 44, 45 peut être, ici en position adjacente à l'un des reliefs 38 (ou moyens d'engagement comparables), reçu de façon ajustée dans l'un des crans 22. On prévoit ici un nombre N de reliefs 38 (optionnellement définis par au moins deux projections) qui est le même que le nombre de crans 22 ou éventuellement un multiple de ce nombre N. Chaque relief 38 est configuré pour s'engager de façon ajustée dans l'un des crans 22, avec le même espacement circonférentiel d'un relief 38 à l'autre que pour les crans 22.

Les organes de retenue 44, 45 s'étendent latéralement (au moins au niveau de leur portion rigide 46) de l'une à l'autre de deux portions de collet 40 adjacentes dans l'état assemblé avec le manchon (cf. figure 5B). Bien entendu, la portion rigide 46 peut le cas échéant se décomposer en plusieurs sous-parties et/ou ne s'engager que contre l'un des bords longitudinaux du cran 22 associé, en particulier lorsque le nombre N de crans est supérieur ou égal à quatre. En complément ou en alternative, l'ajustement d'une projection ou relief 38 dans un cran 22 peut être obtenu par l'intermédiaire d'un des organes de retenue 44, 45, par exemple avec une complémentarité de forme entre la partie d'ancrage 35 et les organes de retenue 44, 45, qui permet de remplir un cran 22 en s'étendant de l'un à l'autre des bords longitudinaux B1 et B2.

Au moins une partie des organes de retenue 44 peut en outre comporter une extension longitudinale sous la forme d'une patte élastiquement déformable de type clip, se terminant par un ergot 44a (dans l'exemple illustré, la patte se déforme par écartement radial vers l'intérieur lors d'une phase de chevauchement avec la face interne de la paroi ajourée 15a). La patte élastiquement déformable s'étend longitudinalement depuis la portion rigide 46 d'indexation en rotation jusqu'à une extrémité libre (typiquement pourvue de l'ergot 44a) formant la butée en prise avec le rebord RB de la partie d'ancrage 35.

Selon une forme de réalisation nullement limitative, les deux organes de retenue 44 qui présentent la patte élastiquement déformables sont typiquement diamétralement opposés par rapport à l'ouverture centrale 30a du couvercle 30. Deux autres organes de retenue 45 formés dans la première portion 31 en position adjacente à l'ouverture 30a peuvent chacun présenter essentiellement une portion rigide 46 d'indexation en rotation.

Le mode d'assemblage permet d'obtenir un double effet anti-rotation : entre les pièces 15, 30 de l'unité de séparation 100, et entre l'unité de séparation et le manchon 19, avec une structure d'unité de séparation 100 qui peut minimiser le nombre de pièces.

Le mode de circulation du gaz dans l'unité de séparation 100 va à présent être décrit, notamment en référence aux figures 1, 2, 5A-5b et 6.

Dans la configuration présentée ici, c'est la force centrifuge liée à la rotation qui permet d'évacuer les particules d'huile, par exemple collectées sous la forme d'un film d'huile :
- vers une paroi latérale du couvercle 30, en particulier une paroi latérale sans ouverture radiale définie par la deuxième portion 32,
- puis vers les drains définis à l'aide des rainures 17.

Du côté de la première portion 31, plusieurs ouvertures de distribution accélérée O1 sont définies autour de l'ouverture centrale 30a et à une certaine distance radiale de cette ouverture centrale 30a. La première portion 31 définit une paroi de transfert 2 du gaz brut G, au travers de laquelle le gaz G circulant dans l'amenée 3 peut passer pour être dévié ensuite par une première face F1 en vis-à-vis, qui appartient à paroi de déviation 4.

Comme bien visible sur les figures 1 et 2, la première portion 31 présente un renfoncement annulaire RF du côté de sa face externe. L'entrée de chacune des ouvertures de distribution accélérée O1 se situe dans ce renfoncement annulaire RF, de préférence à une plus grande distance radiale de l'axe longitudinal A de l'unité de séparation 100 que la distance d'une ligne de fond LF du renfoncement RF.

Ce type d'agencement de la première extrémité 101 de l'unité de séparation 100 permet d'orienter des lignes de courant du gaz brut G de façon non parallèle à l'axe longitudinal A lors de l'entrée du gaz brut G dans la chambre d'impaction 5, et en éloignant ces lignes de courant de l'axe longitudinal A² dès l'entrée dans la chambre d'impaction 5. Dans l'option non limitative illustrée, le renfoncement annulaire RF peut définir une pente ayant la même inclinaison par rapport à l'axe longitudinal A.

En référence aux figures 5A et 5B, la zone en pente correspond à la paroi de transfert 2, les orifices de distribution accélérée O1 étant ici formés dans cette pente. L'angle α montré sur la figure 2 est un angle aigu défini entre l'axe longitudinal A et une direction D2 de génératrice de la paroi de transfert 2 en pente. L'angle α est par exemple compris entre 55 et 84°, typiquement entre 60 et 80°.

La forme tronconique de révolution de la paroi de transfert 2 correspond à une option qui permet de réaliser également la paroi de déviation 4 avec une forme tronconique similaire, de façon à conserver une distance D5 d'écartement sensiblement constante entre ces deux parois 2, 4. La distance D5 est une dimension caractéristique de la chambre d'impaction 5 délimitée entre ces deux parois 2, 4. La distance D5 peut être définie comme la distance entre la sortie du trou définissant l'ouverture de distribution accélérée O1 et la surface d'impaction (cf. zone Z4 visible sur la figure 3) formée en vis-à-vis de ce trou.

Les lignes de courant du gaz peuvent ainsi rejoindre la zone périphérique de passage annulaire ZP par un effet de guidage vers l'arrière. Les éventuelles projections 14 sur la paroi de déviation 4 accentuent l'effet de déviation vers l'arrière. Les nervures C5 contribuent à guider plus directement le gaz vers le deuxième compartiment V2 et peuvent limiter les interférences, dans la chambre d'impaction 5, entre les lignes de courant issues d'une ouverture O1 donnée et les lignes de courant issues d'autres ouvertures O1 de la paroi de transfert 2.

Tandis que le diamètre des ouvertures O1 peut être compris entre 2 et 8 mm par exemple, la distance D5 peut être comprise entre 2 et 25 mm sans que cette gamme soit limitative, de préférence entre 3 et 10 mm, dans des versions particulièrement compactes du dispositif d'épuration 10.

Les ouvertures O1 n'ont pas nécessairement une forme circulaire et le diamètre peut être remplacé par une dimension caractéristique équivalente. Des buses ou des fentes peuvent permettre d'accélérer le gaz non traité G. L'accélération de la vitesse de ce gaz peut correspondre à valeurs de vitesse comprises entre 05 et 90 m/s, de manière non limitative.

Dans certaines options, il peut être prévu des orifices additionnels placés ailleurs que dans la pente et/ou la pente peut être remplacée par un mode de perçage en biais des orifices de distribution accélérée O1. Dans ce cas, la paroi de déviation 4 peut être adaptée à la répartition des ouvertures O1 ou une zone additionnelle permettant un effet d'impaction peut être ajoutée.

Dans les ouvertures de distribution accélérée O1 et dans la chambre d'impaction 5, il y a un effet d'accélération avant l'impact, suivant une direction majoritairement axiale. Ceci contribue à former des plus grosses gouttelettes qui seront plus faciles à séparer par la suite. La taille de ces gouttelettes est suffisamment importante pour subir la force centrifuge liée à la rotation de la partie rotor autour de l'axe Y (ici confondu avec l'axe central A).

Les gaz traités GP sont guidés vers un passage qui diverge par rapport au trajet des gouttes d'huile HG. Au niveau du deuxième compartiment V2, la section est importante, de sorte que les gaz traités GP sont ralentis et peuvent donc plus facilement s'écouler sans turbulences dans la zone aval Z2 jusque dans l'espace intérieur 9, de façon centripète. La phase lourde formée par les gouttes d'huile HG se sépare efficacement de la phase légère formée par les gaz traités GP et on comprend qu'il n'y a pas ou quasiment pas de réentraînement d'huile vers la sortie S.

Dans certaines options, des fibres d'un média sont ajoutées pour permettent de réaliser la coalescence de microgouttelettes d'huile arrivant du côté amont Z1 par impact inertiel ou diffusion brownienne sur les fibres, de sorte que les particules d'huile doivent se regrouper pour former de plus grosses gouttes HG.

Les gouttelettes d'huile HG séparées des gaz sont avantageusement rejetées en permanence le long d'une paroi latérale externe de l'unité de séparation 100, ici définie par la deuxième portion 32 du couvercle 30 avec un effet d'évasement vers le flasque 16. Dans l'exemple non limitatif de la figure 6, les gouttelettes d'huile HG s'évacuent via les ouvertures O2 vers une canalisation de drainage 90 située en dessous du dispositif d'épuration 1.

La partie rotor du dispositif 10 peut optionnellement comporter une liaison d'entraînement avec un moteur électrique à vitesse de rotation programmable. La vitesse de rotation est ainsi modulable en fonction des paramètres pertinents.

Depuis le bord externe distal B4, le flux de gaz peut être guidé suivant une direction parallèle mais de sens opposé à la direction générale de guidage définie dans la chambre d'impaction 5 entre les zones Z4 et le bord externe B4.

Le mode de séparation d'huile des gaz de carter décrit précédemment à titre illustratif n'est pas limitatif quant à la portée de l'invention. Ainsi, l'axe de rotation Y peut être vertical, et la zone aval Z2 de gaz traités GP qui communique avec la sortie S peut être définie au moins en partie par l'espace périphérique autour de l'unité de séparation 100.

Un des avantages du dispositif d'épuration 1 est de permettre une séparation très efficace des gaz de carter en réduisant les pertes de charge liées à la présence d'huile par rapport à un impacteur statique, sans complexité de conception de la partie rotor qui peut être amovible. La simplification du dispositif permet d'en accroître la fiabilité.

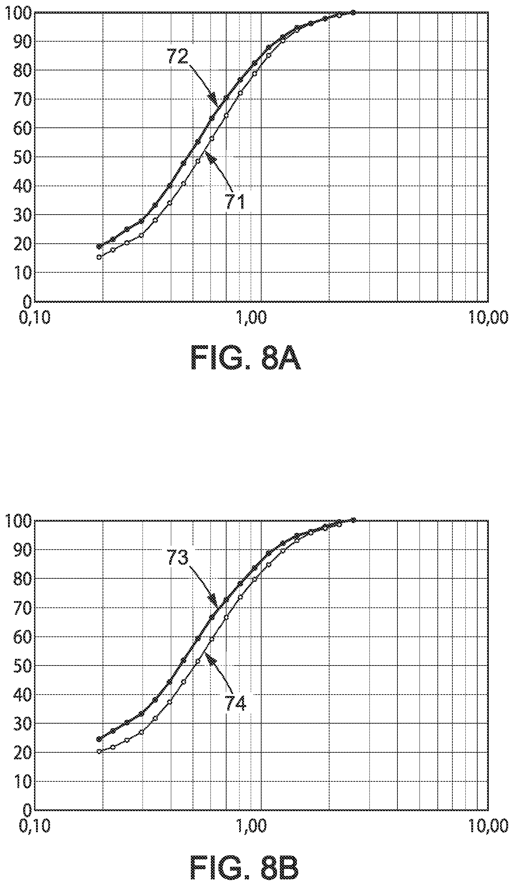

En référence aux figures 8A et 8B, on peut observer que les résultats de séparation sont meilleurs avec une paroi de déviation 4 du genre inclinée vers l'arrière (vers le sens axial d'arrivée du flux de gaz traversant les ouvertures de distribution accélérée O1). Un même genre de compteur de particules a été utilisé ici pour mesurer les résultats, le débit d'entrée étant constant, de l'ordre de 100 litres par minute. Sur ces deux diagrammes, l'axe des ordonnées correspond à une efficacité de rendement, exprimée en pourcentage. L'axe des abscisses correspond à des tailles moyennes de gouttelettes d'huile avant séparation (c'est-à-dire avant d'entrer dans la chambre d'impaction 5). Le débit du gaz G est le même, ici de l'ordre de 100 L par minute.

En référence à la figure 8A, la vitesse de rotation est de 1500 tours par minute. La courbe 71 qui concerne le cas d'un séparateur rotatif, avec impaction sur une paroi de déviation perpendiculaire à l'axe de rotation Y, montre une efficacité de séparation de l'ordre de 56 % pour des particules de 0,6 µm et d'environ 78 % pour des particules de 0,9 µm. La courbe 72, qui se rapporte à un cas similaire avec cependant une impaction sur une paroi de déviation 4 tronconique comme illustré sur la figure 1, montre une efficacité de séparation accrue, de l'ordre de 64 % pour des particules de 0,6 µm et d'environ 83 % pour des particules de 0,9 µm.

Le rendement de séparation est nettement amélioré pour les particules liquides dont la taille est inférieure à 1,05 µm.

En référence à la figure 8B, la vitesse de rotation est de 6000 tours par minute. La courbe 73 qui concerne le cas d'un séparateur rotatif, avec impaction sur une paroi de déviation perpendiculaire à l'axe de rotation Y, montre une efficacité de séparation de l'ordre de 59 % pour des particules de 0,6 µm et d'environ 80 % pour des particules de 0,9 µm. La courbe 74, qui se rapporte à un cas similaire avec cependant une impaction sur une paroi de déviation 4 tronconique comme illustré sur la figure 1, montre une efficacité de séparation accrue, de l'ordre de 67 % pour des particules de 0,6 µm et d'environ 84 % pour des particules de 0,9 µm.

Ici également, le rendement de séparation est nettement amélioré pour les particules liquides dont la taille est inférieure à 1,05 µm.

Plus généralement, l'unité de séparation 100 peut être adaptée pour tourner selon une large gamme de vitesses de rotation en obtenant des meilleurs rendements de séparation. L'unité de séparation 100, ici associée à l'élément de rotor 18, tourne par exemple typiquement de 1500 à 10400 tr/min. Pour d'autres applications, on peut être amené à tourner à une vitesse inférieure, par exemple de 350 à 4000 tr/min. Cela peut dépendre de l'arbre 11 sur lequel est fixé le dispositif d'épuration 1.

La vitesse de rotation a une influence positive sur l'efficacité de séparation de séparation des particules de plus petite taille mais augmente la perte de charge générée par le dispositif 1. Le fait d'accroître le rendement de séparation est donc très avantageux en ce qu'il peut aussi permettre de compenser en partie des baisses de rendement de séparation inhérentes aux conditions de fonctionnement, causées par exemple par une réduction du débit d'entrée (plus le débit est élevé, meilleure est la séparation car la vitesse d'impact est augmentée). Avec des murs d'impact conventionnels, de telles baisses de rendement peuvent conduire à descendre en dessous de seuils réglementaires. Les effets combinés de la force centrifuge et du guidage non purement radial de la paroi de déviation permettent d'éviter des baisses trop significatives de rendement. Un compromis entre efficacité et perte de charge est plus aisément obtenu avec un dispositif d'épuration 1 conforme à l'invention.

Un autre des avantages d'un dispositif 1 selon l'invention est qu'il peut être placé en dehors du carter de distribution, de sorte qu'il n'est plus soumis aux éclaboussures et arrivées massives d'huile. Il en résulte moins de pics de perte de charge et une meilleure évacuation de l'huile.

Il doit être évident pour les personnes versées dans l'art que la présente invention permet des modes de réalisation sous de nombreuses autres formes spécifiques sans l'éloigner du domaine d'application de l'invention comme revendiqué. Ainsi, le corps 15 et le couvercle 30 sensiblement en forme de cloche peuvent être conçus et/ou assemblés entre eux différemment. L'assemblage de ces éléments peut être réalisé en utilisant tout mode de fixation approprié, l'encliquetage par des pattes ou organes de retenue 44 élastiquement déformables correspondant à une option préférée (mais non limitative) pour rendre l'assemblage de l'unité de séparation 100 particulièrement simple.

Par ailleurs, le dispositif d'épuration 10 peut également être rendu plus compact dans le sens axial en ayant des parois 2 et 4 sensiblement perpendiculaires à l'axe longitudinal A. Dans ce cas, il est éventuellement prévu des reliefs sur une zone d'extrémité de la première face F1, par exemple comme illustré dans la variante de la figure 7, près du bord externe distal B4.

## Revendications

1. Dispositif (1) d'épuration d'un gaz (G) issu d'un carter de moteur à combustion interne, destiné à être interposé entre une amenée (3) des gaz chargés et une conduite (60) d'évacuation de gaz épurés (GP), comprenant une unité de séparation (100) permettant de séparer de l'huile du flux de gaz, cette unité de séparation (100) comprenant :
- une paroi de transfert (2) présentant plusieurs ouvertures de distribution accélérée (O1), permettant au gaz circulant dans l'amenée (3) de traverser la paroi de transfert (2) ;
- une paroi (4) de déviation de flux de gaz placée dans une zone de passage d'au moins un flux de gaz ayant traversé les ouvertures de distribution accélérée (O1), la paroi de déviation (4) comprenant une première face (F1) en regard des ouvertures de distribution accélérée et une deuxième face (F2) opposée à la première face (F1) ;
chacune parmi la paroi de transfert (2) et la paroi de déviation (4) s'étendant de façon annulaire autour d'un axe longitudinal (A) de l'unité de séparation (100), la paroi de déviation (4) présentant un bord externe (B4) distal de l'axe longitudinal (A),
l'unité de séparation (100) étant tournante autour de l'axe longitudinal (A) et chacune des ouvertures de distribution accélérée (O1) définissant un accès axial à une chambre d'impaction (5) délimitée entre la paroi de transfert (2) et la première face de la paroi de déviation (4), ledit accès axial étant formé du côté d'une première extrémité (101) de l'unité de séparation (100) et permettant de définir un sens d'arrivée du flux de gaz (G), **caractérisé en ce que** l'unité de séparation (100) présente un corps (15) réalisé d'une pièce qui comporte :
- un flasque (16), annulaire, en regard de la deuxième face (F2) de la paroi de déviation (4) ;
- la paroi de déviation (4) ; et
- une paroi latérale tubulaire ajourée (15a) qui s'étend autour de l'axe longitudinal (A) entre le flasque (16) et la paroi de déviation (4),
au moins une partie de la paroi de déviation (4) étant agencée pour guider, dans la chambre d'impaction, le flux de gaz suivant une orientation inverse du sens d'arrivée.

2. Dispositif d'épuration selon la revendication 1, dans lequel l'une au moins parmi la paroi de déviation (4) et la paroi de transfert (2) présente une forme générale tronconique qui, en combinaison avec l'effet centrifuge lorsque l'unité de séparation (100) est entraînée en rotation, permet de guider le flux de gaz radialement vers l'extérieur et avec une composante axiale en sens inverse du sens d'arrivée.

3. Dispositif d'épuration selon la revendication 1 ou 2, dans lequel la paroi de déviation (4) et la paroi de transfert (2) sont chacune de forme générale tronconique et espacées axialement entre elles.

4. Dispositif d'épuration selon l'une quelconque des revendications précédentes, dans lequel l'unité de séparation (100) définit deux compartiments (V1, V2) séparés entre eux par la paroi de déviation (4) à l'exception d'une zone de passage annulaire (ZP) adjacente au bord externe distal (B4), les deux compartiments (V1, V2) consistant en :
- un premier compartiment (V1) définissant la chambre d'impaction (5) ; et
- un deuxième compartiment (V2) débouchant radialement vers l'intérieur d'une part, pour faire sortir le flux de gaz épuré (GP) de l'unité de séparation (100), et débouchant axialement à l'opposé de la première extrémité d'autre part, en regard de la zone de passage annulaire (ZP), afin de faire sortir des gouttelettes d'huile (HG) de l'unité de séparation (100).

5. Dispositif d'épuration selon la revendication 4, comprenant un manchon central (19) rigide, creux et apte à être entraîné en rotation par un arbre moteur (11), le deuxième compartiment (V2) débouchant radialement vers l'intérieur du manchon central (19) pour faire sortir le flux de gaz épuré (GP) de l'unité de séparation (100).

6. Dispositif d'épuration selon l'une quelconque des revendications précédentes, dans lequel l'unité de séparation (100) comprend un couvercle (30), distinct de la paroi de déviation (4) et définissant un volume interne (V3) dans lequel s'étend la paroi de déviation (4), le couvercle (30) comprenant :
- une première portion (31) incluant la paroi de transfert (2) et définissant la première extrémité (101) de l'unité de séparation (100) ;
- une deuxième portion (32), de forme tubulaire, enveloppant latéralement la paroi de déviation (4) et permettant de guider, depuis une zone (ZP) adjacente au bord externe distal (B4), de l'huile séparée du flux de gaz en direction opposée à la première extrémité (101).

7. Dispositif d'épuration selon l'une quelconque des revendications précédentes, comprenant un élément de rotor (18) destiné à l'entrainement en rotation de l'unité de séparation (100) dans un état assemblé entre l'élément de rotor (18) et l'unité de séparation (100), l'unité de séparation (100) étant couplée à l'élément de rotor (18), de façon fixe en rotation et fixe en translation longitudinale, l'élément de rotor (18) définissant une sortie axiale de gaz épuré du dispositif d'épuration (1).

8. Dispositif d'épuration selon l'une quelconque des revendications précédentes, dans lequel la paroi de déviation (4) présente une rugosité résultant de reliefs dont les dimensions sont submillimétriques.

9. Dispositif d'épuration selon l'une quelconque des revendications précédentes, dans lequel la paroi de déviation (4) délimite une zone concave (Z4) en regard d'une des ouvertures de distribution accélérée (O1), de préférence en incluant au moins une projection (14) en saillie vers la première extrémité (101) depuis la première face (F1).

10. Dispositif d'épuration selon la revendication 7 seule ou combinée à la revendication 8 ou 9, dans lequel l'unité de séparation (100) est creuse et s'étend autour d'un espace intérieur (9) central, l'élément de rotor (18) étant engagé dans l'espace intérieur (9) contre une pluralité de surfaces de contact (SC, SC') de l'unité de séparation (100) dans l'état assemblé.

11. Dispositif d'épuration selon l'une quelconque des revendications 1 à 8, dans lequel l'unité de séparation (100) comprend un couvercle (30), distinct de la paroi de déviation (4) et définissant un volume interne (V3) dans lequel s'étend la paroi de déviation (4), le couvercle (30) ayant un renfoncement annulaire (RF) pour former une pente au niveau de la paroi de transfert (2), les orifices de distribution accélérée (O1) étant formés dans cette pente pour permettre d'orienter des lignes de courant du gaz brut (G) de façon non parallèle à l'axe longitudinal (A) lors de l'entrée du gaz brut (G) dans la chambre d'impaction (5), et en éloignant ces lignes de courant de l'axe longitudinal (A) dès l'entrée dans la chambre d'impaction (5).

12. Dispositif d'épuration selon l'une quelconque des revendications précédentes, dans lequel la chambre d'impaction (5) communique avec un espace intérieur (9), délimité par la paroi latérale (15a) dudit corps (15), successivement par :
- une première zone annulaire (ZP) s'étendant autour de la paroi de déviation (4) et adjacente au bord externe (B4) distal de la paroi de déviation (4) ;
- une deuxième zone annulaire, délimitée entre le flasque (16) et la deuxième face (F2) de la paroi de déviation (4), le long de la paroi latérale (15a) ; et
- une pluralité d'ouvertures de passage radial (150), définies dans la paroi latérale (15a) du corps (15) entre la paroi de déviation (4) et le flasque (16) ;
ce grâce à quoi, le flux de gaz est acheminé de façon centripète entre la première zone annulaire (ZP) et l'espace intérieur (9).

13. Dispositif d'épuration selon l'une quelconque des revendications précédentes, dans lequel la distance axiale minimale entre le flasque (16) et la paroi de déviation (4) est supérieure à une distance axiale (D5) entre la paroi de transfert (2) et la première face (F1) de la paroi de déviation (4).

14. Système (10) de traitement d'un gaz (G) issu d'un carter de moteur à combustion interne, comprenant le dispositif d'épuration (1) défini dans l'une quelconque des revendications précédentes, le système comprenant :
- un élément de rotor (18) permettant l'entraînement en rotation de l'unité de séparation (100) dans un état assemblé entre l'élément de rotor (18) et l'unité de séparation (100) ;
- un arbre (11) d'entraînement en rotation qui définit un axe (Y) de rotation et présente une extrémité d'ancrage (11a) pour fixer l'élément de rotor (18) avec un même alignement selon l'axe (Y) de rotation qui coïncide sensiblement avec l'axe longitudinal (A) de l'unité de séparation (100) ;
- un élément de canalisation qui comporte une entrée pour l'admission de gaz non traités (G), une sortie (S) pour évacuer les gaz traités (GP), et un passage pour l'arbre (11) d'entraînement aligné avec l'axe (Y) de rotation, l'extrémité d'ancrage (11a) s'étendant dans un espace intérieur (9) de l'unité de séparation (100) en étant entourée par une portion (PR) de raccordement de l'élément de rotor (18) ; et
- deux moyens de butée opposés (48, 18a) formés respectivement sur l'arbre d'entrainement (11) et l'élément de rotor (18), de préférence à l'extérieur de l'espace intérieur (9), permettant à l'unité de séparation (100) d'être bloquée axialement par rapport à l'arbre d'entraînement (11) lorsque l'élément de rotor (18) est fixé à l'extrémité d'ancrage (11a).

15. Méthode d'assemblage sur un arbre d'entraînement (11) d'un dispositif d'épuration (1) tel que défini dans l'une quelconque des revendications 1 à 13, le dispositif d'épuration (1) comprenant un élément rotor (18) pour supporter l'unité de séparation (100), le procédé comprenant les étapes consistant essentiellement à :
- fournir le corps (15) réalisé d'une pièce qui inclut la paroi de déviation (4), et un couvercle (30), de préférence sensiblement en forme de cloche, qui définit la première extrémité (101) et la paroi de transfert (2), afin de former l'unité de séparation (100) par insertion de la paroi de déviation (4) dans un volume interne (V3) de l'unité de séparation (100) ;
- fixer l'élément de rotor (18) sur l'arbre d'entraînement (11) par des moyens de fixation (V), de façon à verrouiller en translation longitudinale et en rotation une position d'engagement de l'arbre d'entraînement (11) dans un logement interne défini par une portion de raccordement (PR) formée dans l'élément de rotor (18), l'élément de rotor présentant, autour de l'arbre d'entraînement (11), une face externe (F) pourvue de crans (22) longitudinaux ; et
- assembler le dispositif d'épuration (1) en interconnectant l'unité de séparation (100) et l'élément de rotor (18), par insertion de l'élément de rotor (18) dans un espace intérieur (9) creux de l'unité de séparation (100) et engagement, dans lesdits crans (22), de reliefs appartenant à l'un et/ou à l'autre du corps (15) et du couvercle (30), jusqu'à obtenir une relation bloquée en rotation de l'unité de séparation (100) et de l'élément de rotor (18).

## Patentansprüche

1. Reinigungsvorrichtung (1) für ein Gas (G) aus einem Gehäuse eines Verbrennungsmotors, die zwischen einem Einlass (3) beladener Gase und einer Leitung (60) zur Ausleitung gereinigter Gase (GP) angeordnet ist, aufweisend eine Abscheideeinheit (100), die es ermöglicht, das Öl aus dem Gasstrom abzuscheiden, wobei die Abscheideeinheit (100) aufweist:
- eine Übertragungswand (2), aufweisend mehrere Öffnungen zur beschleunigten Verteilung (O1), die es dem im Einlass (3) zirkulierenden Gas ermöglichen, die Übertragungswand zu durchqueren;
- eine Gasstrom-Umlenkwand (4), die in einem Durchlassbereich von mindestens einem Gasstrom angeordnet ist, der die Öffnungen zur beschleunigten Verteilung (O1) durchquert hat, wobei die Umlenkwand (4) eine erste Fläche (F1), die den Öffnungen zur beschleunigten Verteilung zugewandt ist, und eine zweite Fläche (F2) gegenüberliegend der ersten Fläche (F1) aufweist;
wobei die Übertragungswand (2) und die Umlenkwand (4) sich jeweils ringförmig um eine Längsachse (A) der Abscheideeinheit (100) erstrecken, wobei die Umlenkwand (4) einen Außenrand (B4) distal zur Längsachse (A) aufweist;
wobei die Abscheideeinheit (100) um die Längsachse (A) drehbar ist und jede der Öffnungen zur beschleunigten Verteilung (O1) einen Zugang definiert, der axial zu einer Impaktionskammer (5) ist, die von der Übertragungswand (2) und der ersten Fläche der Umlenkwand (4) begrenzt wird, wobei der axiale Zugang an einer Seite eines ersten Endes (101) der Abscheideeinheit (100) gebildet ist und das Definieren einer Eintrittsrichtung des Gasstroms (G) ermöglicht,
**dadurch gekennzeichnet, dass** die Abscheideeinheit (100) einen Körper (15) aufweist, der einstückig ausgebildet ist und aufweist:
- einen ringförmigen Flansch (16), der der ersten Fläche (F2) der Umlenkwand (4) zugewandt ist;
- eine Umlenkwand (4); und
- eine rohrförmige, mit Öffnungen versehene Außenwand (15a), die sich um die Längsachse (A) zwischen dem Flansch (16) und der Umlenkwand (4) erstreckt,
wobei mindestens ein Teil der Umlenkwand (4) angeordnet ist, um den Gasstrom entlang einer Richtung, die der Eintrittsrichtung entgegengesetzt ist, in die Verdichtungskammer zu leiten.

2. Reinigungsvorrichtung nach Anspruch 1, wobei die Umlenkwand (4) und/oder die Übertragungswand (2) eine allgemein kegelstumpfförmige Form aufweisen, die es, in Kombination mit der Zentrifugalwirkung, dann, wenn die Abscheideeinheit (100) in Rotation versetzt wird, ermöglicht, den Gasstrom radial nach außen und mit einer Axialkomponente in Gegenrichtung der Eintrittsrichtung zu leiten.

3. Reinigungsvorrichtung nach einem der Ansprüche 1 oder 2, wobei die Umlenkwand (2) und die Übertragungswand (2) jeweils allgemein kegelstumpfförmig und axial voneinander beabstandet sind.

4. Reinigungsvorrichtung nach einem der vorstehenden Ansprüche, wobei die Abscheideeinheit (100) zwei Kammern (V1, V2) definiert, die voneinander durch eine Umlenkwand (4) getrennt sind, mit Ausnahme eines ringförmigen Durchgangsbereichs (ZP) benachbart dem distalen Außenrand (B4), wobei die beiden Kammern (V1, V2) bestehen aus:
- einer ersten Kammer (V1), die eine Impaktionskammer (5) definiert; und
- eine zweite Kammer (V2), die radial in das Innere eines Teils mündet, damit der Strom gereinigten Gases (GP) aus der Abscheideeinheit (100) austritt, und axial gegenüberliegend des ersten Endes des anderen Teils, dem ringförmigen Durchgangsbereich (ZP) zugewandt, einmündet, um die Öltröpfchen (HG) aus der Abscheideeinheit auszuleiten.

5. Reinigungsvorrichtung nach Anspruch 4, umfassend eine steife, hohle Mittelhülse (19), die eingerichtet ist, durch eine Motorwelle (11) in Drehung versetzt zu werden, wobei die zweite Kammer (V2) radial ins Innere der Mittelhülse (19) einmündet, um den Strom gereinigten Gases (GP) aus der Abscheideeinheit (100) auszuleiten.

6. Reinigungsvorrichtung nach einem der vorstehenden Ansprüche, wobei die Abscheideeinheit (100) einen Deckel (30) aufweist, der sich von der Umlenkwand (4) unterscheidet und der ein Innenvolumen (V3) definiert, in dem sich die Umlenkwand (4) erstreckt, wobei der Deckel (30) aufweist:
- einen ersten Abschnitt (31), der die Übertragungswand (2) beinhaltet und das erste Ende (101) der Abscheideeinheit (100) definiert;
- einen zweiten Abschnitt (32), der röhrenförmig ist und die Ableitungswand (4) seitlich umschließt, und der es ermöglicht, ein aus dem Gasstrom abgeschiedenes Ö1 in einer dem ersten Ende entgegengesetzten Richtung bis in einen Bereich (ZP) benachbart des distalen Außenrands (B4) zu leiten.

7. Reinigungsvorrichtung nach einem der vorstehenden Ansprüche, umfassend ein Rotorelement (18), das eingerichtet ist, um von der Abscheideeinheit (100) in Rotation versetzt zu werden, in einem zwischen dem Rotorelement (18) und der Abscheideeinheit (100) montierten Zustand, wobei die Abscheideeinheit (100) gegen Drehung und Längsverschiebung gesichert an das Rotorelement (18) gekoppelt ist, wobei das Rotorelement (18) einen Axialauslass für gereinigtes Gas aus der Reinigungsvorrichtung (1) definiert.

8. Reinigungsvorrichtung nach einem der vorstehenden Ansprüche, wobei die Umlenkwand (4) eine aus Reliefs resultierende Rauigkeit besitzt, deren Abmessungen im Sub-Millimeterbereich liegen.

9. Reinigungsvorrichtung nach einem der vorstehenden Ansprüche, wobei die Umlenkwand (4) einen konkaven Bereich (Z4) begrenzt, der einer der Öffnungen zur beschleunigten Verteilung (O1) zugewandt ist, wobei er bevorzugt mindestens einen Vorsprung (14) aufweist, der in Richtung des ersten Endes (101) bis zur ersten Fläche (F1) vorsteht.

10. Reinigungsvorrichtung nach Anspruch 7, alleinstehend oder in Kombination mit den Ansprüchen 8 oder 9, wobei die Abscheideeinheit (100) hohl ist und sich um einen zentralen Innenraum (9) erstreckt, wobei das Rotorelement (18) im montierten Zustand im Innenraum (9) an einer Vielzahl von Kontaktflächen (SC, SC') der Abscheideeinheit (100) anliegt.

11. Reinigungsvorrichtung nach einem der Ansprüche 1 bis 8, wobei die Abscheideeinheit (100) einen Deckel (30) aufweist, der sich von der Umlenkwand (4) unterscheidet und ein Innenvolumen (V3) definiert, in dem sich die Umlenkwand (4) erstreckt, wobei der Deckel (30) eine ringförmige Vertiefung (RF) aufweist, um an der Übertragungswand (2) ein Gefälle zu bilden, wobei die Öffnungen zur beschleunigten Verteilung (O1) in diesem Gefälle gebildet sind, um es zu ermöglichen, die Strömungsleitungen des Rohgases (G) beim Eintritt des Rohgases (G) in die Impaktionskammer (5) auf nicht-parallele Weise zur Längsachse (A) und durch Entfernen dieser Strömungsleitungen von der Längsachse (A) ab dem Eintritt in die Impaktionskammer (5) auszurichten.

12. Reinigungsvorrichtung nach einem der vorstehenden Ansprüche, wobei die Impaktionskammer (5) mit einem Innenraum (9) in Verbindung steht, der von der Seitenwand (15a) des Körpers (15) begrenzt wird, nacheinander durch:
- einen ersten ringförmigen Bereich (ZP) der sich um die Umlenkwand (4) erstreckt und dem Außenrand (B4) distal zur Umlenkwand (4) benachbart ist;
- einen zweiten ringförmigen Bereich, der zwischen dem Flansch (16) und der zweiten Fläche (Z2) der Umlenkwand (4) begrenzt ist, entlang der Seitenwand (15a); und
- eine Vielzahl von radialen Durchgangsöffnungen (150), die in der Seitenwand (15a) des Körpers (15) zwischen der Umlenkwand (4) und dem Flansch (16) definiert sind, wobei der Gasfluss in zentrierter Art und Weise zwischen dem ersten ringförmigen Bereich (ZP) und dem Innenraum (9) geführt wird.

13. Reinigungsvorrichtung nach einem der vorstehenden Ansprüche, wobei der minimale Axialabstand zwischen dem Flansch (16) und der Umlenkwand (4) größer als ein Axialabstand (D5) zwischen der Übertragungswand (2) und der ersten Fläche (F1) der Umlenkwand (4) ist.

14. System (10) zur Aufbereitung von Gas (G) aus einem Gehäuse eines Verbrennungsmotors, aufweisend die Reinigungsvorrichtung (1), die in einem der vorstehenden Ansprüche definiert ist, wobei das System aufweist:
- ein Rotorelement (18), das es ermöglicht, die Abscheideeinheit (100) in einem Zustand, in dem sie zwischen dem Rotor (18) und der Abscheideeinheit (100) montiert ist, in Rotation zu versetzen;
- eine Rotationsantriebsachse (11), die eine Drehachse (Y) definiert und eine Verankerungsextremität (11a) zum Befestigen des Rotorelements (18) mit einer gleichen Fluchtung entlang der Drehachse (Y), die im Wesentlichen mit der Längsachse (A) der Abscheideeinheit (100) übereinstimmt, aufweist;
- ein Kanalisierungselement, das einen Einlass zum Einleiten unbehandelter Gase (G), einen Auslass (S) zum Ausleiten der behandelten Gase (GP), und eine Passage für die Antriebsachse (11) aufweist, die mit der Drehachse (Y) fluchtet, wobei sich die Verankerungsextremität (11a) in einen Innenraum (9) der Abscheideeinheit (100) erstreckt, wobei sie von einem Anschlussabschnitt (PR) des Rotorelements (18) umgeben ist; und
- zwei gegenüberliegende Anschlagseinrichtungen (48, 18a), die jeweils auf der Antriebswelle (11) und dem Rotorelement (18) ausgebildet sind, bevorzugt außerhalb des Innenraums (9), was es der Abscheideeinheit (100) ermöglicht, in Bezug auf die Antriebsachse (11) axial blockiert zu werden, wenn das Rotorelement (18) an der Verankerungsextremität (11a) befestigt ist.

15. Verfahren zur Montage einer Reinigungsvorrichtung (1), wie in einem der Ansprüche 1 bis 13 definiert, auf einer Antriebsachse (11), wobei die Reinigungsvorrichtung (1) ein Rotorelement (18) zum Lagern der Abscheideeinheit (100) aufweist, wobei das Verfahren die Schritte umfasst, die im Wesentlichen bestehen aus:
- Bereitstellen des Körpers (15), der aus einem Stück ausgebildet ist, das die Umlenkwand (4) aufweist, und eines bevorzugt im Wesentlichen glockenförmigen Deckels (30), der das erste Ende (101) und die Übertragungswand (2) definiert, um durch Einschieben der Umlenkwand (4) in ein Innenvolumen (V3) der Abscheideeinheit (100) die Abscheideeinheit (100) zu bilden;
- Befestigen des Rotorelements (18) auf der Antriebsachse (11) durch Befestigungsmittel (V), in Art einer Verriegelung bei Längsverschiebung und bei Drehung einer Eingriffsposition der Antriebswelle (11) in einer Innenaufnahme, die durch einen in dem Rotorelement (18) gebildeten Verbindungsabschnitt (PR) definiert wird, wobei das Rotorelement um die Antriebsachse (11) eine mit Längskerben (22) versehene Außenfläche (F) aufweist; und
- Montage der Reinigungsvorrichtung (1) durch Zusammenschließen der Abscheideeinheit (100) und des Rotorelements (18) durch Einschieben des Rotorelements (18) in einen hohlen Innenraum (9) der Abscheideeinheit (100) und durch Eingriff, in die Längskerben (22) der Reliefs, die zu dem Körper (15) und/oder dem Deckel (30) gehören, bis zum Erhalt einer drehfesten Beziehung von Abscheideeinheit (100) und Rotorelement (18).

## Claims

1. Device (1) for purifying a gas (G) from an internal combustion engine crankcase, intended to be inserted between a loaded gas feed (3) and a conduit (60) for discharging purified gases (GP), comprising a separation unit (100) suitable for separating oil from the gas stream, this separation unit (100) comprising:
- a transfer wall (2) having several accelerated distribution openings (01), enabling the gas circulating in the feed (3) to traverse the transfer wall (2);
- a gas stream deflection wall (4) placed in a passage zone of at least one gas stream having traversed the accelerated distribution openings (01), the deflection wall (4) comprising a first face (F1) facing the accelerated distribution openings and a second face (F2) opposite the first face (F1);
each of the transfer wall (2) and the deflection wall (4) extending in an annular manner about a longitudinal axis (A) of the separation unit (100), the deflection wall (4) having an outer edge (B4) distal from the longitudinal axis (A),
the separation unit (100) being rotatable about the longitudinal axis (A) and each of the accelerated distribution openings (01) defining an axial access to an impaction chamber (5) delimited between the transfer wall (2) and the first face of the deflection wall (4), said axial access being formed on the side of a first end (101) of the separation unit (100) and suitable for defining a direction of arrival of the gas (G) stream,
**characterised in that** the separation unit (100) has a body (15) made of one piece which includes:
- an annular flange (16), facing the second face (F2) of the deflection wall (4);
- the deflection wall (4); and
- a perforated tubular side wall (15a) which extends about the longitudinal axis (A) between the flange (16) and the deflection wall (4),
at least a part of the deflection wall (4) being arranged to guide, in the impaction chamber, the gas stream along an opposite orientation of the direction of arrival.

2. Purification device according to claim 1, wherein at least one of the deflection wall (4) and the transfer wall (2) has a general truncated shape which, in combination with the centrifugal effect when the separation unit (100) is rotated, is suitable for guiding the gas stream radially outwards and with an axial component in the opposite direction of the direction of arrival.

3. Purification device according to claim 1 or 2, wherein the deflection wall (4) and the transfer wall (2) are each of general truncated shape and spaced axially from each other.

4. Purification device according to any one of the preceding claims, wherein the separation unit (100) defines two compartments (V1, V2) separated from each other by the deflection wall (4) with the exception of an annular passage zone (ZP) adjacent to the distal outer edge (B4), the two compartments (V1, V2) consisting of:
- a first compartment (V1) defining the impaction chamber (5); and
- a second compartment (V2) opening radially inwards, on one hand, to release the purified gas (GP) stream from the separation unit (100), and opening axially opposite the first end, on the other hand, facing the annular passage zone (ZP), in order to release oil droplets (HG) from the separation unit (100).

5. Purification device according to claim 4, comprising a hollow, rigid central sleeve (19), rotatable by a motor shaft (11), the second compartment (V2) opening radially towards the interior of the central sleeve (19) to release the purified gas (GP) stream from the separation unit (100).

6. Purification device according to any one of the preceding claims, wherein the separation unit (100) comprises a cover (30), separate from the deflection wall (4) and defining an internal volume (V3) in which the deflection wall (4) extends, the cover (30) comprising:
- a first portion (31) including the transfer wall (2) and defining the first end (101) of the separation unit (100);
- a second portion (32), of tubular shape, laterally encompassing the deflection wall (4) and suitable for guiding, from a zone (ZP) adjacent to the distal outer edge (B4), the oil separated from the gas stream in the opposite direction to the first end (101).

7. Purification device according to any one of the preceding claims, comprising a rotor element (18) intended to rotate the separation unit (100) in an assembled state between the rotor element (18) and the separation unit (100), the separation unit (100) being coupled with the rotor element (18), fixed in rotation and fixed in longitudinal translation, the rotor element (18) defining an axial outlet of purified gas from the purification device (1).

8. Purification device according to any one of the preceding claims, wherein the deflection wall (4) has a roughness resulting from reliefs the dimensions whereof are submillimetric.

9. Purification device according to any one of the preceding claims, wherein the deflection wall (4) delimits a concave zone (Z4) facing one of the accelerated distribution openings (01), preferably including at least one projection (14) projecting towards the first end (101) from the first face (F1).

10. Purification device according to claim 7 alone or combined with claim 8 or 9, wherein the separation unit (100) is hollow and extends about a central internal space (9), the rotor element (18) being engaged in the internal space (9) against a plurality of contact surfaces (SC, SC') of the separation unit (100) in the assembled state.

11. Purification device according to any one of claims 1 to 8, wherein the separation unit (100) comprises a cover (30), separate from the deflection wall (4) and defining an internal volume (V3) wherein the deflection wall (4) extends, the cover (30) having an annular recess (RF) to form a slope at the level of the transfer wall (2), the accelerated distribution orifices (01) being formed in this slope to make it possible to orient the stream lines of the raw gas (G) in a non-parallel manner to the longitudinal axis (A) upon the entry of the raw gas (G) into the impaction chamber (5), and moving these stream lines away from the longitudinal axis (A) starting from the entry into the impaction chamber (5).

12. Purification device according to any one of the preceding claims, wherein the impaction chamber (5) communicates with an internal space (9), delimited by the side wall (15a) of said body (15), successively via:
- a first annular zone (ZP) extending about the deflection wall (4) and adjacent to the distal outer edge (B4) of the deflection wall (4);
- a second annular zone, delimited between the flange (16) and the second face (F2) of the deflection wall (4), along the side wall (15a); and
- a plurality of radial passage openings (150), defined in the side wall (15a) of the body (15) between the deflection wall (4) and the flange (16);
whereby the gas stream is transported centripetally between the first annular zone (ZP) and the internal space (9).

13. Purification device according to any one of the preceding claims, wherein the minimum axial distance between the flange (16) and the deflection wall (4) is greater than an axial distance (D) between the transfer wall (2) and the first face (F1) of the deflection wall (4).

14. System (10) for treating a gas (G) from an internal combustion engine crankcase, comprising the purification device (1) defined in any one of the preceding claims, the system comprising:
- a rotor element (18) intended to rotate the separation unit (100) in an assembled state between the rotor element (18) and the separation unit (100);
- a rotational drive shaft (11) which defines an axis (Y) of rotation and has an anchoring end (11a) to attach the rotor element (18) with the same alignment along the axis (Y) of rotation which is substantially coincident with the longitudinal axis (A) of the separation unit (100);
- a channelling element which includes an inlet for the intake of untreated gases (G), an outlet (S) to discharge the treated gases (GP), and a passage for the drive shaft (11) aligned with the axis (Y) of rotation, the anchoring end (11a) extending into an internal space (9) of the separation unit (100) while being surrounded by a connection portion (PR) of the rotor element (18); and
- two opposite stop means (48, 18a) formed respectively on the drive shaft (11) and the rotor element (18), preferably outside the internal space (9), enabling the separation unit (100) to be axially locked with respect to the drive shaft (11) when the rotor element (18) is attached to the anchoring end (11a).

15. Method for the assembly on a drive shaft (11) of a purification device (1) as defined in any one of claims 1 to 13, the purification device (1) comprising a rotor element (18) to support the separation unit (100), the method comprising the steps essentially of:
- providing the body (15) made of one piece which includes the deflection wall (4), and a cover (30), preferably substantially bell-shaped, which defines the first end (101) and the transfer end (2), so as to form the separation unit (100) by inserting the deflection wall (4) in an internal volume (V3) of the separation unit (100);
- attaching the rotor element (18) to the drive shaft (11) by attachment means (V), so as to lock in longitudinal translation and in rotation an engagement portion of the drive shaft (11) in an inner housing defined by a connection portion (PR) formed in the rotor element (18), the rotor element having, about the drive shaft (11), an outer face (F) provided with longitudinal notches (22); and
- assembling the purification device (1) by interconnecting the separation unit (100) and the rotor element (18), by inserting the rotor element (18) into a hollow internal space (9) of the separation device (100) and engaging, in said notches (22), reliefs belonging to one and/or to the other of the body (15) and the cover (30), until a locked connection in rotation of the separation unit (100) and the rotor element (18) is obtained.
